(19) Europäisches Patentamt European Patent Office Office européen des brevets

(11) **EP 3 839 788 B1**

(12) **EUROPEAN PATENT SPECIFICATION**

(45) Date of publication and mention of the grant of the patent:
**21.02.2024 Bulletin 2024/08**

(21) Application number: **20193625.9**

(22) Date of filing: **31.08.2020**

(51) International Patent Classification (IPC):
*G06F 21/60* (2013.01)    *G06F 21/62* (2013.01)
*G06F 21/79* (2013.01)    *H04L 9/06* (2006.01)

(52) Cooperative Patent Classification (CPC):
**H04L 9/0631; G06F 21/602; G06F 21/6209;**
**G06F 21/79;** H04L 2209/24

(54) **BIT-LENGTH PARAMETERIZABLE CIPHER**

BITLÄNGEN-PARAMETRIERBARE CHIFFRE

CHIFFREMENT À LONGUEUR DE BIT PARAMÉTRABLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.12.2019 US 201916724059**

(43) Date of publication of application:
**23.06.2021 Bulletin 2021/25**

(73) Proprietor: **INTEL Corporation**
**Santa Clara, CA 95054 (US)**

(72) Inventors:
• **Kounavis, Michael E.**
**Portland, OR Oregon 97229 (US)**
• **Ghosh, Santosh**
**Hillsboro, or Oregon 97124 (US)**
• **Deutsch, Sergej**
**Hillsboro, OR Oregon 97123 (US)**
• **Durham, David M.**
**Beaverton, or Oregon 97007 (US)**

(74) Representative: **Goddar, Heinz J.**
**Boehmert & Boehmert**
**Anwaltspartnerschaft mbB**
**Pettenkoferstrasse 22**
**80336 München (DE)**

(56) References cited:
**US-A1- 2011 296 202    US-A1- 2015 244 518**
**US-A1- 2016 056 954**

EP 3 839 788 B1

**Description**

TECHNICAL FIELD

This disclosure relates in general to the field of computer systems and, more particularly, to a bit-length parameterizable cipher that may be used in cryptographic computing implementations.

BACKGROUND

Cryptographic computing may refer to solutions for computer system security that employ cryptographic mechanisms inside processor components. Some cryptographic computing systems may employ encryption and/or other cryptographic mechanisms inside a processor core on memory pointers or user data before such data leave the processor boundary and enter some external memory unit or are communicated to some device. Such flexible encryption operations can substantially reduce the typical overheads associated with current solutions such as accessing tables with permissions, memory ranges or other security metadata, as such tables may be large, stored in external memory units, and be time consuming to access.

US 2015/244518 A1 describes a variable-length block cipher apparatus and method capable of format preserving encryption. An encryption device for a variable-length block cipher apparatus includes an encryption key generation unit configured to generate encryption round keys eRK0, eRK1, ... , eRKNr using a secret key and the number of rounds Nr, and a ciphertext output unit configured to output ciphertext having a length identical to that of plaintext using the plaintext and the encryption round keys.

US 2016/056954 A1 describes an apparatus and method for providing a Feistel-based variable length block cipher, which are configured to when plaintext having a certain bit length is encrypted, generate ciphertext having the same bit length as plaintext, and to decrypt ciphertext into plaintext having the same bit length. The apparatus includes an encryption/decryption key generation unit for generating a number of encryption/decryption keys corresponding to a preset number of rounds, based on a secret key, the length of the secret key, the length of plaintext, and a round constant; an encryption/decryption tweak generation unit for generating an encryption/decryption tweak based on a tweak, a length of tweak, and the length of plaintext; and a ciphertext output unit for outputting ciphertext having length identical to that of plaintext, based on plaintext, the length of the plaintext, the length of the secret key, the encryption/decryption keys, and the encryption/decryption tweak.

US 2011/296202 A1 describes a fetch unit which fetches a sequence of blocks of encrypted instructions of an encrypted program from an instruction cache at a corresponding sequence of fetch address values. While fetching each block of the sequence, the fetch unit generates a decryption key as a function of key values and the corresponding fetch address value, and decrypts the encrypted instructions using the generated decryption key by XORing them together. A switch key instruction instructs the microprocessor to update the key values in the fetch unit while the fetch unit is fetching the sequence of blocks. The fetch unit inherently provides an effective decryption key length that depends upon the function and amount of key values used.

The invention is defined in the independent claims. Embodiments of the invention are described in the dependent claims.

According to an embodiment the method of the invention includes that the output of the bit-level reordering operation comprises N bits, and the substitution box operation is performed using at least floor (N/M) Galois field inverters, where M < N, wherein N is a multiple of M, and the number of Galois field inverters used in the substitution box operation is N/M.

According to an embodiment the method of the invention includes that the constant is a first constant, and the method further comprises deriving a third set of key bits at least in part by: performing a fourth integer arithmetic operation on the second set of key bits and a second constant; performing a fourth bit-level reordering operation on an output of the integer arithmetic operation; and performing a fourth substitution box operation on an output of the bit-level reordering operation, wherein the third bit-level reordering operation is based on a different reordering sequence than the fourth bit-level reordering operation.

According to an embodiment the method of the invention includes that the third and fourth substitution box operations are performed using Galois field inverters. According to an embodiment the method of the invention includes that the bit-level reordering operation of each round is based on a different, randomly generated reordering sequence.

According to an embodiment the method of the invention includes that N is a multiple of M, and the number of Galois field inverters used in the substitution box operation is N/M.

According to an embodiment the method of the invention includes that the key for a first arithmetic-reorder-substitution round is an encryption key, and the key for each subsequent round is derived from the encryption key.

According to an embodiment the method of the invention includes that the key for each subsequent round is derived by: performing an integer arithmetic operation on the key for the previous round and a constant; performing a bit-level reordering operation on an output of the integer arithmetic operation; and performing a substitution box operation on an output of the bit-level reordering operation.

According to an embodiment the method of the invention includes that the integer arithmetic operation comprises one of an integer addition with carries operation and an integer subtraction with borrows operation.

According to an embodiment the method of the invention includes that the constant used in each integer arithmetic operation is different.

According to an embodiment the method of the invention includes that the bit-level reordering operation for each key is based on a different reordering sequence.

According to an embodiment the method of the invention includes that the substitution box operation is performed using Galois field inverters.

BRIEF DESCRIPTION OF THE DRAWINGS

To provide a more complete understanding of the present disclosure and features and advantages thereof, reference is made to the following description, taken in conjunction with the accompanying figures, where like reference numerals represent like parts, in which:

FIGURE 1 is a flow diagram of an example process for implementing bit-length parameterizable cipher;
FIGURE 2 is a flow diagram of an example process that includes a sequence of operations for implementing a bit-length parameterizable cipher;
FIGURE 3A is a flow diagram of an example arithmetic-reorder operation process for a bit-length parameterizable cipher;
FIGURE 3B is a diagram of an example process of tweaking a round key word to obtain a round key used in the arithmetic-reorder operation process of FIGURE 3A;
FIGURES 4A-4B are diagrams illustrating example substitution box (S-box) operations for a bit-length parameterizable cipher;
FIGURE 5 is a flow diagram of an example key schedule process for a bit-length parameterizable cipher;
FIGURES 6A-6B illustrate a code snippet for generating random reordering index sequences for a bit-length parameterizable cipher;
FIGURES 7A-7B are reordering index sequences generated by the code snippet of FIGURES 5A-5B;
FIGURE 8 is a simplified diagram of a cryptographic construction comprising a plurality of interconnected cryptographic oracles that each employ one or more instances of a bit-length parameterizable cipher;
FIGURE 9 is a block diagram illustrating an example processor core and memory according to at least one embodiment; and
FIGURE 10 is a block diagram of an example computer architecture according to at least one embodiment.

DETAILED DESCRIPTION

The following disclosure provides various possible embodiments, or examples, for implementation of cryptographic computing. Cryptographic computing may refer to solutions for computer system security that employ cryptographic mechanisms inside processor components. Cryptographic computing is an important trend in computing, with the very foundation of computing itself is becoming fundamentally cryptographic. Cryptographic computing represents a sea change, a fundamental rethinking of systems security with wide implications for the industry.

A common characteristic of cryptographic computing systems is that they may employ encryption and/or other cryptographic mechanisms inside a processor core on memory pointers or user data before such data leave the processor boundary and enter some external memory unit, or are communicated to some device. Such flexible encryption operations can substantially reduce the typical overheads associated with current solutions such as accessing tables with permissions, memory ranges or other security metadata, as such tables may be large, stored in external memory units, and be time consuming to access.

It is desirable for cryptographic computing systems to support ultra-low latency encryption at arbitrary ciphertext lengths (e.g., 63 bits, 64 bits or 65 bits as well), since the space of available register bits where portions of encrypted data or pointers may be stored may vary depending on the computer architecture and security application where cryptographic computing may be applied. However, current block ciphers are defined for fixed block lengths (e.g., 64 bits or 128 bits). Furthermore, even the most lightweight employ a significant number of rounds.

Current block ciphers, which are either standardized (e.g., AES) or are to be standardized (e.g., though the current NIST lightweight cryptography competition) do not include a cipher that simultaneously meets the two cryptographic computing requirements: (i) support for arbitrary bit lengths in the specification and encryption/decryption operations; and (ii) support for ultra-low latency encryption/decryption operations in HW. For example, lightweight cipher designs such as NSA's "Simon" and "Speck", or designs like "PRINCE" or Qualcomm's "QARMA" are not bit-length parameterizable. Furthermore, such ciphers support many simple rounds, which, even though they contain simpler S-box transforms, and simpler MixColumns stages when compared to AES, still require several clocks in the critical path. As one example, Simon employs a simple Feistel structure, which includes logical AND, XOR and rotation operations over 32-72 rounds. Furthermore, Simon is not bit-length parameterizable, supporting only 5 fixed lengths: i.e., 32, 48, 64, 96 and 128 bit lengths.

Accordingly, aspects of the present disclosure describe a cipher that is bit-length parameterizable and supports ultra-fast encryption based on a novel confusion-diffusion network. A bit-length parameterizable cipher implemented according to the techniques described herein may be a tweakable cipher. In some cases, a bit-length parameterizable cipher implemented according to the techniques described herein may be referred to as a "K-cipher". Certain aspects may support a wide range of widths, e.g., from 32-bits for pointers to 1024 bits for cache lines, and utilize standard cryptographic components such as non-linear P-permutations, which may be block wide but not necessarily cryptographically strong, and S-permutations, which may be strong but of limited width. The cipher may accept as an input (in some cases, along with the plaintext to be encrypted) a bit-length parameter that specifies how many bits of the plaintext are to be encrypted. In some cases, the bit-length parameter specifies the same number of bits that are in the plaintext, and in other cases, the bit-length parameter specifies a number of bits in the plaintext less than the length of the entire plaintext. The cipher encrypts the plaintext bits using an encryption key (which may be of the same or different length from the bit-length parameter). In cases where the encryption key is longer than the bit-length parameter, a subset of the bits of the key equal to the bit-length parameter may be used in the cipher. The cipher encrypts as many bits from the plaintext as specified by the bit-length parameter using a sequence of logical operations that include at least two logical AND operations and two logical XOR operations. Each of the operations is performed both on the bits of the plaintext and on the bits of the key; that is, each of the operations is performed on at least one plaintext bit and at least one key bit. In this manner, both confusion and diffusion between the plaintext and the ciphertext may be achieved.

In certain embodiments, the cipher uses a small number of rounds that combine strong bit mixing primitives in order to fully diffuse the bits of an input and the bits of a key into all bits of the output. The primitives employed by the P-permutation may include integer arithmetic (e.g., addition with carries or subtraction with borrows) in which the carry out is not needed. These operations are invertible by ignoring carry out and borrow out signals. The primitives employed by the P-permutation may also include bit-level reordering. The S-permutation may include wide substitution box (S-box) operations. In some embodiments, the S-box operations may utilize inverters in Galois Fields. Assuming that the number of rounds = 2 for a given implementation, to diffuse across 32 bits only 8-bit S-boxes may be needed (since 32 bits < (8 bits)$^{2\,rounds}$). To diffuse across 128 bits, only 16-bit S-boxes may be needed, as 128 bits < (16 bits)$^{2\,rounds}$. Arbitrary ciphertext lengths are supported by the cipher through the use of Galois field inverters of varying lengths, the sum of which is equal to the requested input and ciphertext lengths. In some embodiments, for example, the Galois field inverters have fixed lengths except for the last one whose length is determined by a mod operation (as described further below).

In certain embodiments, all primitives of the cipher are bit length independent. Furthermore, in some embodiments, the cipher supports the required security for cryptographic computing by employing a small number of rounds where the number of rounds in one embodiment may be as low as two. The cipher may be used, in some cases, for the encryption and decryption of memory pointers and user data inside all types of processor or SoC components, including but not limited to CPU cores, GPU cores, Machine Learning accelerators, FPGAs, etc., or for other purposes.

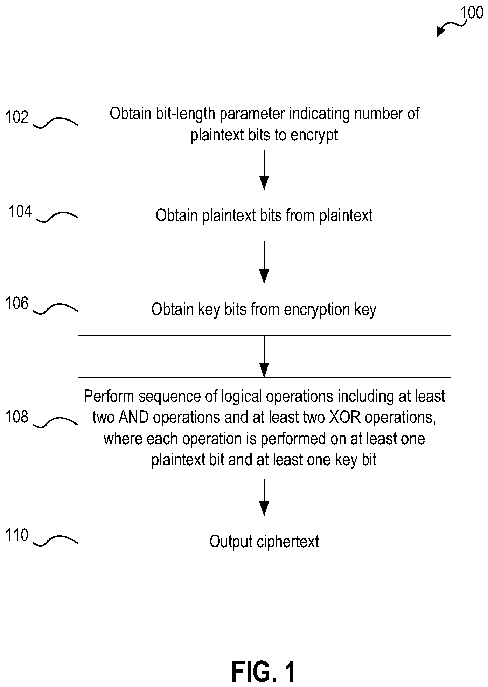

FIGURE 1 is a flow diagram of an example process 100 of implementing bit-length parameterizable cipher. The example process 100 may be implemented through instructions (e.g., microcode and/or microinstructions) stored within a processor, and the instructions may be executed by circuitry within the processor (e.g., in an execution unit or load buffer logic of the processor) to encrypt a set of state bits (e.g., prior to storage in memory or prior to sending the state bits to another portion of a computing system).

At 102, a bit-length parameter is obtained. The parameter may be obtained through a function call, e.g., as a parameter of a function implementing the cipher described herein. The bit-length parameter indicates a number of bits of a plaintext to encrypt.

At 104, a set of plaintext bits is obtained based on the bit-length parameter. In some cases, the number of bits indicated by the bit-length parameter is the same as the number of bits in the plaintext. In these situations, obtaining the set of plaintext bits may include simply accessing the plaintext. In other cases, however, the number of bits indicated by the bit-length parameter is less than the number of bits in the plaintext. In these situations, obtaining the set of plaintext bits may include selecting the indicated number of bits from the plaintext (i.e., selecting a subset of the bits of the plaintext). The selected bits may be the least significant bits of the plaintext, the most significant bits of the plaintext, or some other portion of the plaintext.

At 106, a set of key bits are obtained from an encryption key. In some cases, the number of bits indicated by the bit-length parameter is the same as the number of bits in the encryption key. In these situations, obtaining the set of key bits may include simply accessing the encryption key. In other cases, however, the number of bits indicated by the bit-length parameter is less than the number of bits in the encryption key. In these situations, obtaining the set of key bits may include selecting the indicated number of bits from the encryption key (i.e., selecting a subset of the bits of the encryption key). The selected bits may be the least significant bits of the encryption key, the most significant bits of the encryption key, or some other portion of the encryption key.

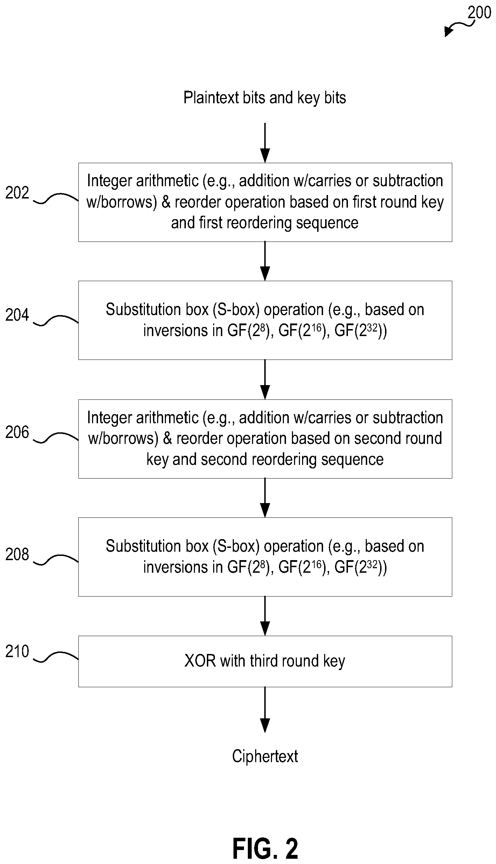

At 108, a sequence of logical operations is performed using the set of plaintext bits and the set of key bits. The sequence of logical operations includes at least two logical AND operations and at least two logical XOR operations. Each operation in the sequence is performed on at least one plaintext bit and at least one key bit. An example sequence of operations is described further below with respect to FIGURES 2-3.

At 110, a ciphertext is output from the sequence of logical operations. The ciphertext may include encrypted memory pointers, user data, or other types of information processed by a processor. The ciphertext may be output to memory for storage, or to another device (e.g., a peripheral device) coupled to the processor in a computing system.

FIGURE 2 is a flow diagram of an example process 200 that includes a sequence of operations for implementing a bit-length parameterizable cipher. In some embodiments, the sequence of operations of process 200 is used to implement the sequence of operations performed by 108 of FIGURE 1. In the example shown, two arithmetic-reorder-substitution rounds (e.g., 202 and 204 as a first round, and 206 and 208 as a second round) are performed using input plaintext bits and key bits (e.g., the set of plaintext bits and set of key bits described above), with each round including an arithmetic-reorder stage (e.g., 202, 206, also referred to as "P-permutation" above) and a substitution box (S-box) stage (e.g., 204, 208, also referred to as "S-permutation" above). The first round's arithmetic-reorder stage performs integer arithmetic on the input state bits using a first round key, and then performs bit-level reordering using a first index sequence. The second round's arithmetic-reorder stage performs integer arithmetic on the output of the first arithmetic-reorder stage using a second round key (different from the first round key), and then performs bit-level reordering using a second index sequence (different from the first index sequence). The index sequences and keys may be generated as described below. The arithmetic-reorder stages are each followed by a wide S-box stage, which in some embodiments is implemented using a number of include Galois field inverters as described below. At 210, an XOR operation is performed on the output of the second arithmetic-reorder-substitution round and a third round key to yield a ciphertext. In some embodiments, the cipher may process inputs of a single bit length only, while other embodiments may be configurable to dynamically select the cipher stages required to process inputs of a bit length from a plurality of bit lengths at run time.

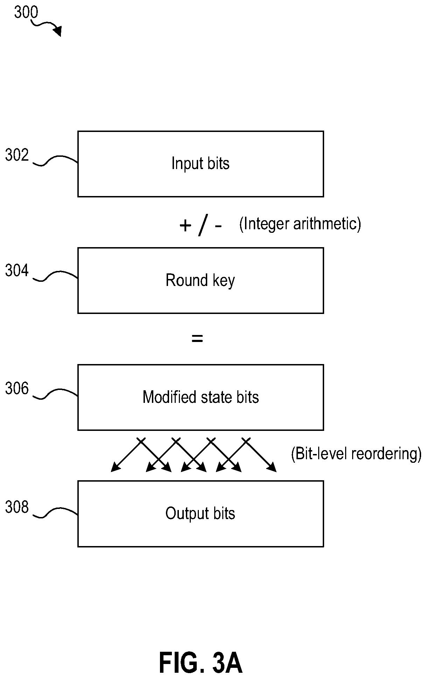

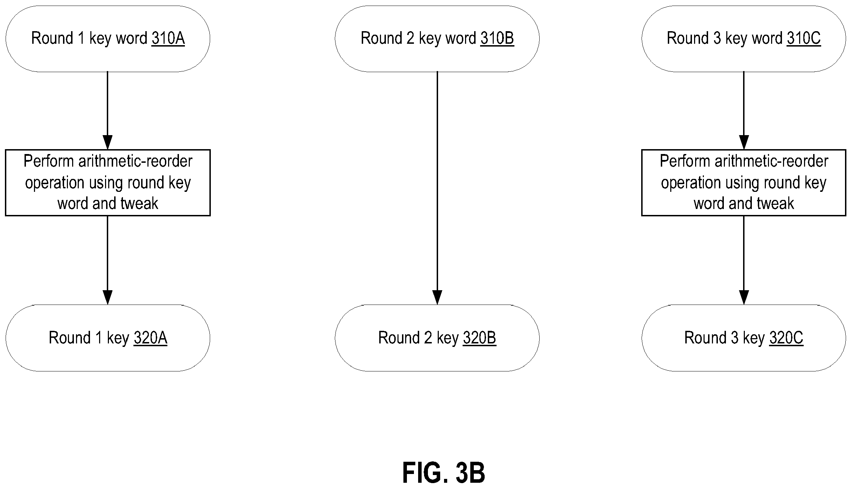

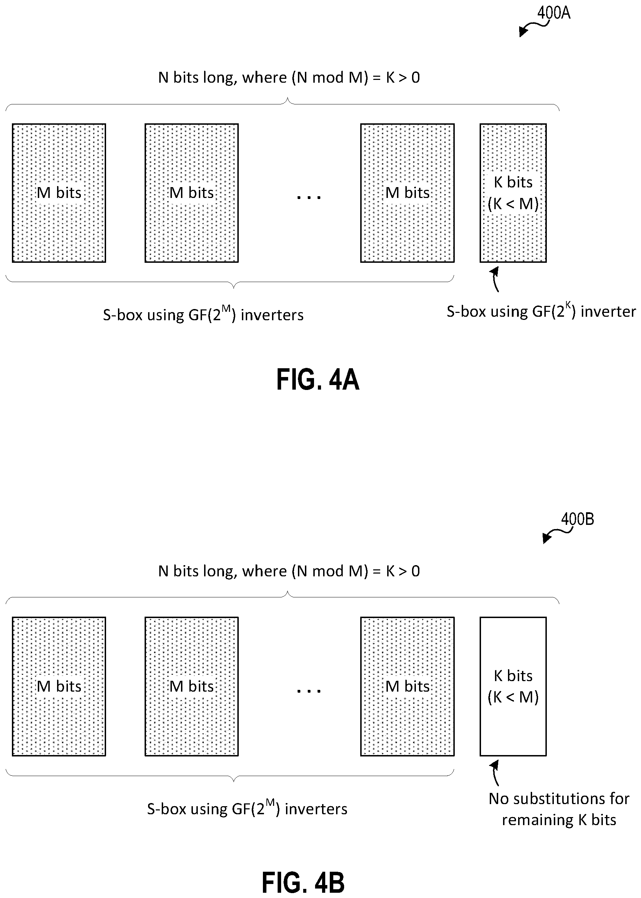

In certain embodiments, the arithmetic-reorder stages 202, 204 are implemented according to the arithmetic-reorder operation process 300 of FIGURE 3A. In the example process 300, the arithmetic-reorder operation receives input bits 302 and then performs integer arithmetic on the bits 302 using a round key 304. The round key used may depend on which arithmetic-reorder round is currently executing. For instance, the first round may use the encryption key (or subset thereof as described above) as the first round key, the second round may use a second key generated based on the encryption key, and the third round may use a third round key generated based on the second round key. The second and third round keys may be generated using versions of the arithmetic-reorder-substitution rounds of the cipher, as shown in FIGURE 4 and described further below. In some embodiments, the respective round keys used may be derived from the example process shown in FIGURE 3B and described further below.

In some embodiments, the integer arithmetic is implemented as an integer addition with carries operation. Addition with carries, if viewed as a bit-logical operation, performs strong mixing of its input bits, in order to produce the bits of the output, where the mixing performed demonstrates some regularity. The term "mixing" as used herein may refer to computations on single bit values that involve a plurality of logical operations which may include but not limited to logical AND, OR, NAND, NOR and XOR operations.

For example, consider the example of adding the 4-bit numbers $<a_3\ a_2\ a_1\ a_0>$ and $<b_3\ b_2\ b_1\ b_0>$ with input carry $c_0$. The first bit of the result is equal to $a_0 \oplus b_0 \oplus c_0$. The carry produced from the addition of the first two bits is equal to $a_0b_0 \oplus b_0c_0 \oplus a_0c_0$. Similarly, the second bit of the result is $a_1 \oplus b_1 \oplus a_0b_0 \oplus b_0c_0 \oplus a_0c_0$ and the carry produced from the addition of the second two bits is equal to $a_1b_1 \oplus a_1a_0b_0 \oplus a_1b_0c_0 \oplus a_1a_0c_0 \oplus b_1a_0b_0 \oplus b_1b_0c_0 \oplus b_1a_0c_0$. Moving on to the addition of the third least significant bits of the input, the same pattern of computation is repeated. The input bits are XOR-ed with each other and with the input carry, in order to produce the output bit. Furthermore, the input bits are multiplied with each other in GF(2) arithmetic (i.e., undergo a logical AND operation) and with the input carry and, subsequently, the products are XOR-ed with each other in order to produce the output carry. The third least significant bit of the result, as computed using this pattern, is $a_2 \oplus b_2 \oplus a_1b_1 \oplus a_1a_0b_0 \oplus a_1b_0c_0 \oplus a_1a_0c_0 \oplus b_1a_0b_0\ {}^{\circledR}\ b_1b_0c_0 \oplus b_1a_0c_0$. The third output carry is $a_2b_2 \oplus a_2a_1b_1 \oplus a_2a_1a_0b_0 \oplus a_2a_1b_0c_0 \oplus a_2a_1a_0c_0 \oplus a_2b_1a_0b_0 \oplus a_2b_1b_0c_0 \oplus a_2b_1a_0c_0 \oplus b_2a_1b_1 \oplus b_2a_1a_0b_0 \oplus b_2a_1b_0c_0 \oplus b_2a_1a_0c_0 \oplus b_2b_1a_0b_0 \oplus b_2b_1b_0c_0 \oplus b_2b_1a_0c_0$. From the logical expressions above, it becomes evident that the mixing performed by the addition with carries stage, as measured by the number of GF(2) products which are XOR-ed with each other, gets only stronger as one moves from the least significant bit of the result toward the most significant bit. In fact, it grows stronger exponentially. It is easy to show that the n-th output bit for the result is produced by XOR-ing $2^n + 1$ products.

To destroy the regularity which characterizes the addition with carries stage, the arithmetic-reorder operation also includes a bit-level reordering operation on the result of the integer addition with carries (i.e., the modified state bits 306 in FIGURE 3A). The reordering operation places the modified state bits 306 in a seemingly random order in the output bits 308, so that the number of GF(2) products of the logic equation of the result no longer increases monotonically, but instead increases and decreases almost at random. Furthermore, the bit-level reordering operation aids the subsequent wide S-box stage of the cipher (e.g., 204, 208 of FIGURE 2), ensuring that each bit of the output of the cipher results from mixing all bits of the input with all bits of the key. The addition with carries is a bit-length independent operation-its specification is independent of the length of the inputs. It is also invertible, with its inverse being the subtraction with borrows operation. In certain instances, final carry-out or borrow-out signals produced from such operations can be ignored. Where addition with carries is used in the encryption stage, subtraction with borrows may be used in the decryption stage.

Although addition with carries is described above as being used in the encryption stage of the cipher, other embodiments of the cipher may employ subtractions with borrows in the encryption stage (using addition with carries as the inverse in the decryption stage). Other embodiments may employ other logical operations that are different from additions and subtractions, but have the same characteristics as them, specifically regularity in their computing pattern, ability to invert and support for bit mixing of exponentially increasing complexity.

In certain embodiments, the S-box operations 204, 208 perform the following steps. First, the N bits provided as input to the operation are divided into blocks of M bits (for the following discussion, it is assumed that N is a multiple of M; the cases where N is not a multiple of M are discussed further below). Where N is a multiple of M, the S-box operation employs an array of N/M inverters in $GF(2^M)$ arithmetic which replace their input bits with the bits of the inverse in $GF(2^M)$. In such Galois fields, which are extensions of GF(2), multiplications between elements are considered to be polynomial multiplications and the result is represented modulo some irreducible polynomial, which defines the finite field. An irreducible polynomial may refer to a polynomial which cannot be factored into the product of two other non-constant polynomials. For example, Galois fields in $GF(2^8)$ can be represented using the irreducible polynomials 0x11B or 0x11D, where these polynomials are binary and expressed as bit vectors. Inversion in the Galois field arithmetic $GF(2^M)$ supports strong bit mixing as the mixing performed by the Galois Field inverters does not demonstrate the regularity of addition with carries and is pseudo-random.

The cipher described herein may support strong encryption security by employing additions and inversions in two unrelated types of arithmetic (e.g., Galois field and integer) and by combining those into sequences of few rounds. Despite the small amount of cipher rounds (e.g., two shown in FIGURE 2), the input and key bits are strongly mixed, potentially thwarting differential, algebraic and other types of attacks. As an example, the following shows the logic equations characterizing a Galois field inverter in $GF(2^8)$ where the field is defined by the irreducible polynomial 0x11D. In the listing the symbol "+" means XOR and the symbol "*" means logical AND. Similar equations also characterize inversions in $GF(2^{16})$, $GF(2^{32})$ and so on.

```
      S0 := (i2) * (~i3) * (i6) * (~i7)    (cardinality = 14, AND
   gates = 3)


      S1 := (i0) * (~i1) * (~i2) * (~i5)    (cardinality = 13, AND
   gates = 3)


      S2 := (~i0) * (i1) * (i3) * (~i7)    (cardinality = 13, AND
   gates = 3)


      S3 := (i0) * (i2) * (i3) * (~i4)    (cardinality = 12, AND
   gates = 3)


      S4 := (~i0) * (i2) * (~i3) * (i7)    (cardinality = 12, AND
   gates = 3)


      S5 := (i0) * (~i3) * (~i5) * (~i6)    (cardinality = 12, AND
   gates = 3)
```

```
      S6 := (i1) * (~i2) * (~i3) * (i5)    (cardinality = 11, AND
gates = 3)


      S7 := (i0) * (~i1) * (i2) * (~i3)    (cardinality = 10, AND
gates = 3)


-
      S8 := (~i0) * (~i1) * (i3) * (i5)    (cardinality = 10, AND
gates = 3)


     S9 := (i0) * (i4) * (i5) * (~i7)    (cardinality = 10, AND
gates = 3)


      S10 := (~i1) * (i4) * (i5) * (i7)    (cardinality = 10, AND
gates = 3)


       S11 := (~i2) * (~i4) * (~i6) * (i7)    (cardinality = 10,
 AND gates = 3)


       S12 := (~i4) * (~i5) * (~i6) * (~i7)    (cardinality = 10,
 AND gates = 3)


       S13 := (~i0) * (i1) * (i3) * (i7)    (cardinality = 9, AND
gates = 3)


       S14 := (i0) * (~i2) * (~i3) * (i6)    (cardinality = 9, AND
gates = 3)


       S15 := (i1) * (i3) * (i4) * (~i6)    (cardinality = 9, AND
gates = 3)


       S16 := (~i4) * (~i5) * (i6) * (i7)    (cardinality = 9, AND
gates = 3)


        S17 := (i0) * (i3) * (i4) * (i6)    (cardinality = 8, AND
 gates = 3)


       S18 := (~i0) * (i1) * (~i2) * (i6)    (cardinality = 7, AND
gates = 3)


        S19 := (~i1) * (~i2) * (~i3) * (~i7)    (cardinality = 7,
 AND gates = 3)
```

7

```
       S20 := (i1) * (i3) * (~i4) * (i5)     (cardinality = 7, AND
gates = 3)


       S21 := (~i1) * (i3) * (~i5) * (~i6)     (cardinality = 7, AND
gates = 3)


       S22 := (i1) * (i2) * (~i6) * (~i7)     (cardinality = 6, AND
gates = 3)


       S23 := (~i1) * (i3) * (i6) * (~i7)     (cardinality = 6, AND
gates = 3)


       S24 := (~i2) * (i3) * (i6) * (i7)     (cardinality = 6, AND
gates = 3)


       S25 := (~i0) * (~i1) * (i2) * (~i6)     (cardinality = 5, AND
gates = 3)


       S26 := (~i0) * (i1) * (~i3) * (~i4)     (cardinality = 5, AND
gates = 3)


       S27 := (i0) * (i1) * (~i3) * (i4)     (cardinality = 5, AND
gates = 3)


       S28 := (~i0) * (~i2) * (i4) * (~i6)     (cardinality = 5, AND
gates = 3)


       S29 := (i2) * (~i4) * (~i5) * (~i6)     (cardinality = 5, AND
gates = 3)


       S30 := (i4) * (i5) * (~i6) * (i7)     (cardinality = 5, AND
gates = 3)


       S31 := (~i0) * (i1) * (i2) * (i6)     (cardinality = 4, AND
gates = 3)


       S32 := (i0) * (i1) * (i2) * (i7)     (cardinality = 4, AND
gates = 3)


       S33 := (i0) * (i1) * (~i5) * (i6)     (cardinality = 4, AND
gates = 3)
```

```
        S34 := (i0) * (~i2) * (i3) * (~i6)      (cardinality = 4, AND
gates = 3)


        S35 := (~i0) * (i2) * (i4) * (~i5)      (cardinality = 4, AND
gates = 3)


        S36 := (i0) * (~i3) * (i5) * (i6)      (cardinality = 4, AND
gates = 3)


     S37 := (~i1) * (~i3) * (~i5) * (i7)      (cardinality = 4, AND
gates = 3)


        S38 := (~i1) * (i5) * (~i6) * (~i7)      (cardinality = 4, AND
gates = 3)


        S39 := (~i2) * (~i3) * (i4) * (~i5)      (cardinality = 4, AND
gates = 3)


         S40 := (i2) * (i3) * (i5) * (i6)      (cardinality = 4, AND
 gates = 3)


        S41 := (~i0) * (i1) * (~i3) * (i6)      (cardinality = 3, AND
gates = 3)


        S42 := (~i0) * (i2) * (~i3) * (~i7)      (cardinality = 3, AND
gates = 3)


        S43 := (i0) * (i3) * (~i4) * (~i7)      (cardinality = 3, AND
gates = 3)


        S44 := (~i0) * (~i4) * (i5) * (~i6)      (cardinality = 3, AND
gates = 3)


        S45 := (~i0) * (i4) * (i6) * (~i7)      (cardinality = 3, AND
gates = 3)


        S46 := (~i1) * (i2) * (~i4) * (i6)      (cardinality = 3, AND
gates = 3)


        S47 := (i1) * (~i2) * (~i4) * (~i7)      (cardinality = 3, AND
gates = 3)
```

```
S48 := (~i1) * (i4) * (~i5) * (~i7)    (cardinality = 3, AND
gates = 3)
```

```
S49 := (~i2) * (~i3) * (i4) * (i7)    (cardinality = 3, AND
gates = 3)
```

```
S50 := (i2) * (~i3) * (i6) * (i7)    (cardinality = 3, AND
gates = 3)
```

```
S51 := (~i2) * (~i5) * (i6) * (~i7)    (cardinality = 3, AND
gates = 3)
```

```
S52 := (i1) * (~i2) * (i4) * (~i5) * (i7)    (cardinality =
2, AND gates = 4)
```

```
S53 := (~i1) * (i3) * (~i4) * (~i5) * (i7)    (cardinality =
2, AND gates = 4)
```

```
S54 := (i0) * (~i1) * (~i2) * (i5)    (cardinality = 2, AND
gates = 3)
```

```
S55 := (i0) * (i1) * (i3) * (i5)    (cardinality = 2, AND
gates = 3)
```

```
S56 := (i0) * (i2) * (i4) * (i6)    (cardinality = 2, AND
gates = 3)
```

```
S57 := (i0) * (i2) * (~i6) * (~i7)    (cardinality = 2, AND
gates = 3)
```

```
S58 := (~i0) * (i3) * (~i4) * (~i7)    (cardinality = 2, AND
gates = 3)
```

```
S59 := (i0) * (~i4) * (i6) * (i7)    (cardinality = 2, AND
gates = 3)
```

```
S60 := (i1) * (~i2) * (i3) * (~i6)    (cardinality = 2, AND
gates = 3)
```

```
S61 := (i1) * (i2) * (i4) * (i6)    (cardinality = 2, AND
gates = 3)
```

```
S62 := (~i1) * (i4) * (i6) * (i7)    (cardinality = 2, AND
gates = 3)

S63 := (~i4) * (i5)    (cardinality = 15, AND gates = 1)

S64 := (~i5) * (~i7)    (cardinality = 14, AND gates = 1)

S65 := (i4) * (~i6)    (cardinality = 12, AND gates = 1)

S66 := (~i1) * (i5)    (cardinality = 11, AND gates = 1)

S67 := (i1) * (~i2)    (cardinality = 9, AND gates = 1)

S68 := (~i1) * (~i4)    (cardinality = 9, AND gates = 1)

S69 := (~i1) * (i3)    (cardinality = 8, AND gates = 1)

S70 := (i1) * (i7)    (cardinality = 8, AND gates = 1)

S71 := (i2) * (~i5)    (cardinality = 8, AND gates = 1)

S72 := (~i2) * (i6)    (cardinality = 8, AND gates = 1)

S73 := (i4) * (i5)    (cardinality = 8, AND gates = 1)

S74 := (~i4) * (~i7)    (cardinality = 8, AND gates = 1)

S75 := (~i5) * (i7)    (cardinality = 8, AND gates = 1)

S76 := (i1) * (~i3)    (cardinality = 7, AND gates = 1)

S77 := (i2) * (i3)    (cardinality = 7, AND gates = 1)

S78 := (i2) * (i5)    (cardinality = 7, AND gates = 1)

S79 := (~i0) * (~i4)    (cardinality = 6, AND gates = 1)

S80 := (~i0) * (i4)    (cardinality = 6, AND gates = 1)
```

```
S81 := (~i3) * (~i4)    (cardinality = 6, AND gates = 1)

S82 := (i5) * (~i7)     (cardinality = 6, AND gates = 1)

S83 := (i0) * (i2)      (cardinality = 5, AND gates = 1)

S84 := (~i0) * (~i5)    (cardinality = 5, AND gates = 1)

S85 := (~i2) * (~i5)    (cardinality = 5, AND gates = 1)

S86 := (~i2) * (i7)     (cardinality = 5, AND gates = 1)

S87 := (i3) * (i7)      (cardinality = 5, AND gates = 1)

S88 := (~i6) * (~i7)    (cardinality = 5, AND gates = 1)

S89 := (~i0) * (~i1)    (cardinality = 4, AND gates = 1)

S90 := (i0) * (i1)      (cardinality = 4, AND gates = 1)

S91 := (i0) * (~i3)     (cardinality = 4, AND gates = 1)

S92 := (i1) * (i2)      (cardinality = 4, AND gates = 1)

S93 := (~i1) * (i4)     (cardinality = 4, AND gates = 1)

S94 := (~i1) * (~i5)    (cardinality = 4, AND gates = 1)

S95 := (~i2) * (~i7)    (cardinality = 4, AND gates = 1)

S96 := (i3) * (i4)      (cardinality = 4, AND gates = 1)

S97 := (~i4) * (~i6)    (cardinality = 4, AND gates = 1)

S98 := (i4) * (i6)      (cardinality = 4, AND gates = 1)

S99 := (~i4) * (i7)     (cardinality = 4, AND gates = 1)
```

```
S100 := (i5) * (~i6)    (cardinality = 4, AND gates = 1)

S101 := (i5) * (i6)     (cardinality = 4, AND gates = 1)

S102 := (i0) * (i3)     (cardinality = 3, AND gates = 1)

S103 := (i0) * (~i4)    (cardinality = 3, AND gates = 1)

S104 := (~i0) * (i6)    (cardinality = 3, AND gates = 1)

S105 := (~i0) * (i7)    (cardinality = 3, AND gates = 1)

S106 := (~i1) * (~i3)   (cardinality = 3, AND gates = 1)

S107 := (i1) * (~i5)    (cardinality = 3, AND gates = 1)

S108 := (~i1) * (i7)    (cardinality = 3, AND gates = 1)

S109 := (~i2) * (i5)    (cardinality = 3, AND gates = 1)

S110 := (~i3) * (i5)    (cardinality = 3, AND gates = 1)

S111 := (i4) * (~i5)    (cardinality = 3, AND gates = 1)

S112 := (~i6) * (i7)    (cardinality = 3, AND gates = 1)

S113 := (~i0) * (~i2)   (cardinality = 2, AND gates = 1)

S114 := (i0) * (i5)     (cardinality = 2, AND gates = 1)

S115 := (~i0) * (~i6)   (cardinality = 2, AND gates = 1)

S116 := (i0) * (~i6)    (cardinality = 2, AND gates = 1)

S117 := (i0) * (i6)     (cardinality = 2, AND gates = 1)

S118 := (i0) * (~i7)    (cardinality = 2, AND gates = 1)
```

```
S119 := (i1) * (~i4)     (cardinality = 2, AND gates = 1)

S120 := (i1) * (i4)      (cardinality = 2, AND gates = 1)

S121 := (i1) * (i5)      (cardinality = 2, AND gates = 1)

S122 := (~i1) * (~i6)    (cardinality = 2, AND gates = 1)

S123 := (~i1) * (i6)     (cardinality = 2, AND gates = 1)

S124 := (~i2) * (~i3)    (cardinality = 2, AND gates = 1)

S125 := (i2) * (~i3)     (cardinality = 2, AND gates = 1)

S126 := (~i2) * (i3)     (cardinality = 2, AND gates = 1)

S127 := (~i2) * (~i4)    (cardinality = 2, AND gates = 1)

S128 := (~i2) * (i4)     (cardinality = 2, AND gates = 1)

S129 := (i2) * (i4)      (cardinality = 2, AND gates = 1)

S130 := (~i2) * (~i6)    (cardinality = 2, AND gates = 1)

S131 := (i3) * (~i5)     (cardinality = 2, AND gates = 1)

S132 := (~i3) * (~i7)    (cardinality = 2, AND gates = 1)

S133 := (i3) * (~i7)     (cardinality = 2, AND gates = 1)

S134 := (~i3) * (i7)     (cardinality = 2, AND gates = 1)

S135 := (~i4) * (~i5)    (cardinality = 2, AND gates = 1)

S136 := (~i4) * (i6)     (cardinality = 2, AND gates = 1)

S137 := (~i5) * (~i6)    (cardinality = 2, AND gates = 1)
```

```
      S138 := (i5) * (i7)    (cardinality = 2, AND gates = 1)


      S139 := (i6) * (i7)    (cardinality = 2, AND gates = 1)
```

optimized logic (using substitutions) for bit 0

```
    S3 * S38 + (~i7) * S5 * S68 + (i2) * S12 * S89 + (i4) * S21

  * S83 + (~i6) * S6 * S74 + (~i7) * S6 * S80 + (i2) * S8 * S65 +
      (i6) * S3 * S64 + (~i0) * S0 * S63 + (~i0) * S0 * S66 +
  (i6) * S6 * S80 + (i0) * S11 * S69 + (~i6) * S3 * S70 +
      (~i0) * S16 * S76 + (i2) * S17 * S70 + S19 * S103 + S21 *
  S127 + S15 * S84 + S44 * S67 +
      S20 * S113 + S9 * S106 + S15 * S82 + S55 * S128 + S14 *
  S135 + S1 * S98 +


      S61 * S64 + S51 * S96 + S23 * S128 + S36 * S92 + S9 * S123
  + S11 * S84 +
      S11 * S107 + (i0) * S53 + (i2) * S53 + S49 * S116 + S28 *
  S87 + S32 * S110 +
      S10 * S124 + (~i5) * (i6) * S4 + S36 * S108 + S40 * S108 +
  (~i5) * S2 + (~i4) * S2 +
      (i6) * S35 + (i0) * S72 * S82 + (i4) * S4 + (~i3) * S62
```

optimized logic (using substitutions) for bit 1

```
      S21 * S80 * S86 + (~i0) * S12 * S76 + (~i3) * S1 * S65 +
  (~i7) * S34 * S93 + (i2) * S8 * S88 + (~i2) * S9 * S69 + (~i7) *
  S14 * S63 +
      (~i2) * S37 * S79 + (~i5) * S13 * S97 + (~i0) * S29 * S87 +
  (i5) * S11 * S91 + (i3) * S11 * S66 + (i6) * S1 * S87 +
      (~i1) * S17 * S75 + (i7) * S14 * S66 + S42 * S135 + S48 *
  S91 + S15 * S71 + S7 * S100 +
      S2 * S109 + S6 * S65 + S27 * S100 + (~i3) * (i6) * S64 *
  S68 + S18 * S131 + (i3) * (~i4) * S33 +
      S23 * S71 + S7 * S98 + S45 * S131 + S47 * S101 + S8 * S72 +
  S27 * S86 +
      S4 * S65 + S26 * S138 + (~i0) * (~i3) * S10 + S10 * S83 +
  S50 * S107 + S24 * S79 +
      S4 * S101 + S10 * S104 + (~i5) * S57 + (~i4) * S57 + (~i7)
  * S20 + (i2) * S20 +
      (i6) * S67 * S133 + (i5) * S31 + (i1) * S30
```

optimized logic (using substitutions) for bit 2

```
      S25 * S73 * S132 + (~i3) * S12 * S67 + (~i2) * S12 * S69 +
(i3) * S25 * S74 + (i3) * S1 * S65 + (~i7) * S26 * S78 + (~i7) *
S6 * S65 +
      (~i6) * S9 * S76 + (i2) * S9 * S69 + (~i2) * S33 * S74 +
(i4) * S13 * S85 + (~i3) * S16 * S67 + (i0) * S16 * S69 +
      S29 * S106 + S7 * S74 + S58 * S71 + (i1) * (~i6) * S3 + S5
* S129 + S35 * S76 +
      S19 * S63 + S63 * S89 * S124 + S2 * S109 + S2 * S73 + S19 *
S136 + S14 * S107 +
      S0 * S103 + S31 * S64 + S31 * S74 + S23 * S71 + S54 * S136
+ S23 * S114 +
      S5 * S86 + S11 * S90 + S4 * S97 + (~i6) * S52 + S65 * S77 *
S105 + S6 * S105 +
      S10 * S130 + S33 * S134 + S46 * S105 + S24 * S114 + S10 *
S117 + (~i0) * S60 +
      (i4) * S40 + (i7) * S44 + (~i6) * S70 * S78
```

optimized logic (using substitutions) for bit 3

```
      (i3) * S1 * S88 + (i4) * S7 * S64 + (i2) * S15 * S64 + (i0)
* S22 * S63 + (i4) * S38 * S77 + (i6) * S1 * S74 + (i0) * S0 *
S94 +
      (~i0) * S0 * S66 + (i0) * S23 * S63 + (i6) * S2 * S78 +
(~i2) * S45 * S66 + (i7) * S5 * S67 + (i3) * S28 * S75 +
      (~i6) * S13 * S78 + (i7) * S14 * S68 + (~i5) * S24 * S90 +
(i6) * S13 * S71 + (i6) * S3 * S70 + (i6) * S13 * S73 +
      S22 * S81 + S22 * S84 + S12 * S69 + S43 * S85 + S34 * S119
+ S3 * S122 +
      S19 * S80 + S27 * S95 + S19 * S100 + S6 * S115 + S60 * S82
+ S34 * S121 +
      S66 * S77 * S116 + S9 * S67 + S18 * S64 + S39 * S104 +
(~i1) * (~i7) * S56 + (i1) * (~i7) * S36 +
      S0 * S73 + S11 * S89 + (i2) * (~i6) * S37 + S37 * S80 +
(i4) * (i7) * S5 + S4 * S65 +
      (i3) * (i5) * S11 + S8 * S99 + S16 * S83 + S62 * S77 +
(~i0) * S47 + (i5) * S27 +
      (i5) * S56 + (~i1) * S65 * S75
```

optimized logic (using substitutions) for bit 4

```
      S7 * S63 * S88 + (~i7) * S5 * S67 + (~i2) * S12 * S102 +
(~i6) * S2 * S85 + (~i0) * S12 * S77 + (i4) * S7 * S64 + (~i6) *
S6 * S74 +
      (~i6) * S2 * S78 + (i2) * S9 * S76 + (~i0) * S0 * S68 +
(i0) * S0 * S93 + (~i0) * S0 * S63 + (~i6) * S3 * S70 +
      (i7) * S5 * S129 + (i7) * S7 * S65 + (~i0) * S11 * S110 +
(i2) * S13 * S63 + (i1) * S4 * S73 + S5 * S119 +
      S12 * S92 + S34 * S68 + S2 * S97 + S48 * S130 + S48 * S113
+ S8 * S95 +
      S51 * S81 + S23 * S84 + S69 * S72 * S84 + (i1) * (i6) * S43
+ S31 * S96 + S14 * S82 +
      S41 * S73 + S17 * S109 + S17 * S121 + S37 * S115 + S25 *
S99 + (i3) * S52 +
      S55 * S112 + S10 * S77 + S35 * S139 + S24 * S63 + (i7) * S1
+ (i7) * S68 * S72 +
      (i0) * S16 + (~i3) * S59 + (i7) * S33
```

optimized logic (using substitutions) for bit 5

```
      (i1) * S5 * S74 + (~i7) * S5 * S93 + (i2) * S5 * S93 + (i2)
* S21 * S80 + (~i6) * S19 * S63 + (i4) * S0 * S90 + (i2) * S2 *
S98 +

      (i4) * S0 * S66 + (i6) * S9 * S92 + (~i6) * S4 * S68 + (i2)
* S16 * S106 + (i6) * S4 * S94 + (i6) * S1 * S87 +
      (i2) * (~i7) * S5 + S29 * S76 + S58 * S122 + S3 * S94 +
(i4) * (~i7) * S25 + S15 * S83 +
      S44 * S132 + S42 * S66 + S6 * S65 + S9 * S126 + S51 * S79 +
S19 * S104 +
      S41 * S64 + S39 * S123 + S17 * S67 + S26 * S75 + S11 * S102
+ S13 * S85 +
      S3 * S75 + (i0) * (~i2) * S30 + S30 * S125 + S30 * S92 +
S14 * S70 + S13 * S72 +
      S49 * S101 + (i2) * S20 + (i6) * S20 + (~i4) * S40 + (i6) *
S70 * S79 + (i5) * S59 +
      (i6) * S63 * S87 + (i7) * S40
```

optimized logic (using substitutions) for bit 6

```
     (~i4) * S2 * S71 + (~i0) * S15 * S71 + (i0) * S20 * S88 +
(i5) * S22 * S102 + (i6) * S1 * S81 + (~i3) * S18 * S64 + (i6) *
S3 * S94 +
     (i1) * S17 * S64 + (~i5) * S4 * S68 + (i1) * S4 * S97 +
(i7) * S21 * S79 + (~i6) * S3 * S75 + (i1) * S4 * S63 +
     (~i6) * S10 * S125 + S47 * S91 + S42 * S137 + S2 * S137 +
S39 * S88 + S28 * S76 +
     (~i3) * (i4) * S22 + S27 * S71 + S1 * S96 + S38 * S81 + S38
* S127 + S6 * S103 +
     S7 * S100 + S28 * S82 + S46 * S118 + S18 * S111 + S18 * S63
+ S0 * S73 +
     S17 * S66 + S1 * S134 + S29 * S108 + S39 * S70 + S16 * S126
+ S24 * S68 +
     S50 * S111 + S24 * S120 + S32 * S101 + S8 * S139 + S10 *
S72 + (~i2) * S8 +
     (~i7) * S36 + (i5) * S61 + (i0) * S73 * S86
```

optimized logic (using substitutions) for bit 7

```
     S2 * S72 * S111 + (i0) * S22 * S81 + (i1) * S3 * S64 +
(~i3) * S28 * S64 + (i0) * S15 * S95 + (~i2) * S15 * S82 + (i1)
* S14 * S64 +
     (~i5) * S0 * S79 + (~i7) * S8 * S98 + (i7) * S1 * S65 +
(~i4) * S8 * S86 + (i2) * S13 * S63 + (~i2) * S16 * S69 +
     (~i0) * S16 * S77 + S12 * S67 + S26 * S85 + S12 * S83 + S29
* S90 + S21 * S95 +
     S21 * S118 + S1 * S133 + (~i3) * (~i6) * S54 + S43 * S66 +
(i1) * (i3) * S9 + S18 * S81 +
     S0 * S89 + S14 * S120 + S46 * S110 + S20 * S72 + S45 * S78
+ S17 * S78 +

     S26 * S75 + S7 * S112 + S7 * S99 + (i3) * (~i6) * S32 + S15
* S75 + S32 * S96 +
     S6 * S99 + S8 * S112 + (~i0) * (i5) * S49 + S18 * S138 +
S10 * S117 + (i4) * S25 +
     (~i1) * S35 + (i4) * S66 * S91 + (i2) * S30 + (i7) * S41 +
(i1) * S50
```

In some embodiments, the bit-length parameterizable cipher may be tweakable. FIGURE 3B is a diagram of an example process of tweaking a round key word to obtain a round key used in the arithmetic-reorder operation process of FIGURE 3A. As shown in the example process 200 of FIGURE 2, the key schedule of the cipher may involve three round keys. Using this example for purposes of illustration, a tweak value having the same length as the round keys may be utilized. The tweak value may mixed with the first and the third round key of the cipher, e.g., by using the arithmetic-reorder operation process of FIGURE 3A. More particularly, the arithmetic-reorder operation may receive a round key word (e.g., 310A, 310C) and then perform integer arithmetic (e.g., integer addition with carries as described above) on the round key word using a tweak value. Bit-level reordering may then be performed on the output of the integer arithmetic to obtain the round key (e.g., 320A, 320C) to be used in the cipher. In certain embodiments, only a subset of the round keys may be tweaked in this way. For instance, in the example shown, only round keys 320A, 320C are based on tweaked round key words 310A, 310C, respectively, while round key 320B is the same as the round key word 310B.

The S-box operations described above are bit-length independent provided that the length of the state bits of the cipher (N) is a multiple of the width of the inverters employed (M). In this case, each wide S-box stage employs N/M inverters. However, if N is not a multiple M, then these situations can be handled as shown in FIGURES 4A-4B, which illustrate example S-box operations 400 for a bit-length parameterizable cipher where N is not a multiple of M. In the examples shown in FIGURES 4A-4B, N mod M is equal to K, where K is non-zero. In the example operation 400A shown in FIGURE 4A, the S-box stage employs floor(N/M) inverters in $GF(2^M)$ arithmetic and one additional inverter in the $GF(2^K)$ arithmetic to handle the last K bits of the cipher state bits. In the example operation 400B shown in FIGURE 4B, the S-box stage employs floor(N/M) inverters in $GF(2^M)$ arithmetic as in FIGURE 4A, but employs no inverter to handle the last K bits of the cipher state. That is, the last K bits do not undergo any S-box operation. However, they are directly mixed with other input and key bits in the cipher stages that follow.

It will be understood that other embodiments that follow the same underlying principles discussed above but deviate from the examples described are contemplated by the present disclosure. For example, certain embodiments may place the K bits which are handled differently in the middle of the cipher state rather than at the end (as shown in FIGURES 4A-4B). Furthermore, certain embodiments may employ inverters of varying widths all in the same cipher specification, and certain embodiments may employ logic functions other than Galois field inverters that still demonstrating pseudo-random mixing.

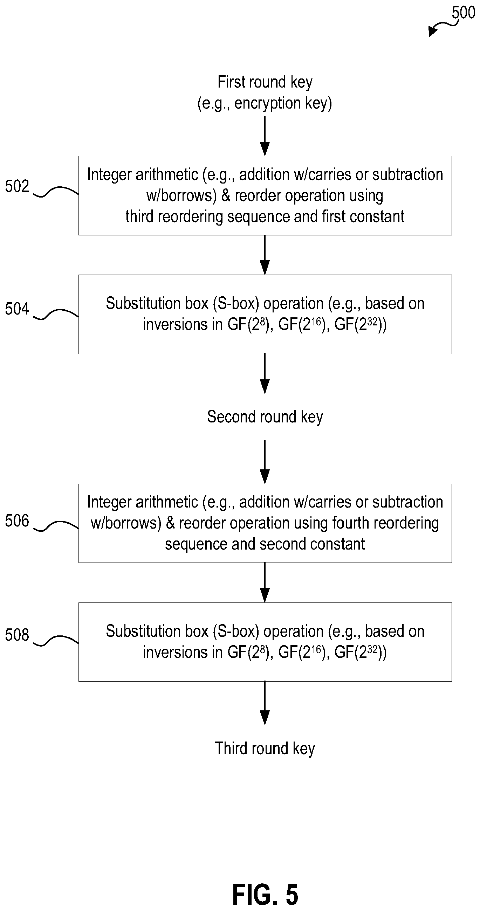

In some embodiments, the round keys used in the bit-length parameterizable cipher (e.g., in 202, 206) may be generated according to the key schedule process 500 of FIGURE 5. The illustrated key scheduler process has the same general structure as the cipher of FIGURE 2, but uses a different set of re-ordering sequences and constants to expand an input encryption key to a sequence of round keys used by the different cipher rounds. In the example shown, an encryption key is used as the first round key. However, a first round key may be derived from the encryption key in other embodiments. The first round key may be used in the first arithmetic-reorder stage of the cipher (e.g., in 202 of FIGURE 2).

The encryption key goes through a first arithmetic-reordering stage 502 followed by a first wide S-box stage 504 to yield a second round key. The arithmetic-reordering stage 502 may be implemented using the process 300, except that it uses a first constant in place of the round key described with respect to FIGURE 3. Further, the reordering index sequence used may be different from that used in any other the arithmetic-reordering stage of the cipher. The S-box stage 504 may be implemented in the same manner as described above with respect to the S-box stages 204, 208. The second round key may be used in the second arithmetic-reorder stage of the cipher (e.g., in 206 of FIGURE 2).

The second round key goes through a second arithmetic-reordering stage 506 followed by a second wide S-box stage 508 to yield a third round key. The arithmetic-reordering stage 506 may be implemented using the process 300, except that it uses a second constant in place of the round key described with respect to FIGURE 3. Further, the reordering index sequence used may be different from that used in any other the arithmetic-reordering stage of the cipher. The S-box stage 508 may be implemented in the same manner as described above with respect to the S-box stages 204, 208. The third round key may be XORed with the output of the second S-box stage of the cipher (e.g., in 210 of FIGURE 2).

In embodiments where the set of key bits is a subset of the encryption key, the process 500 may be implemented using the entire encryption key or only the set of key bits selected from the encryption key. For example, in one embodiment, the entire encryption key may be provided as input to 502 even though only a subset of the bits of the encryption are used in the cipher as key bits. This would produce second and third round keys having more bits than needed in the cipher (i.e., more than the bit-length parameter indicates), so subsets of those keys may be selected and used in the cipher. In another embodiment, only the subset of bits selected for use in the cipher may be provided as input to 502, producing second and third round keys that are of the same length as the bit-length parameter and requiring no selection of a subset of their bits for use in the cipher.

It will be understood that certain embodiments may employ additional arithmetic-reorder-substitution rounds than those shown in FIGURE 2, and thus would require additional round keys. In such instances, each additional round key may be generated using the same process as described above, i.e., using additional arithmetic-reordering stages, each followed by a S-box stage.

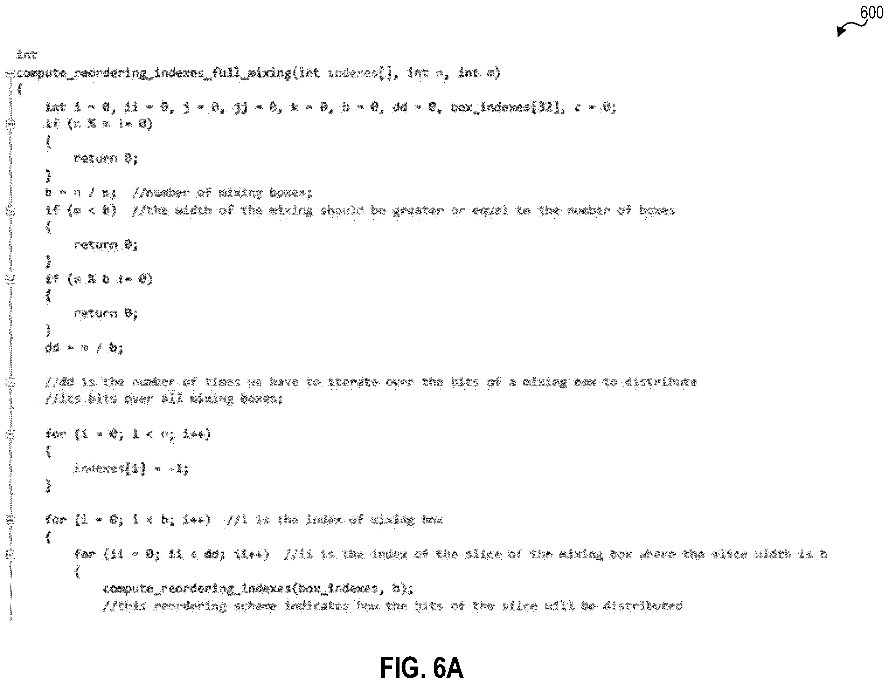

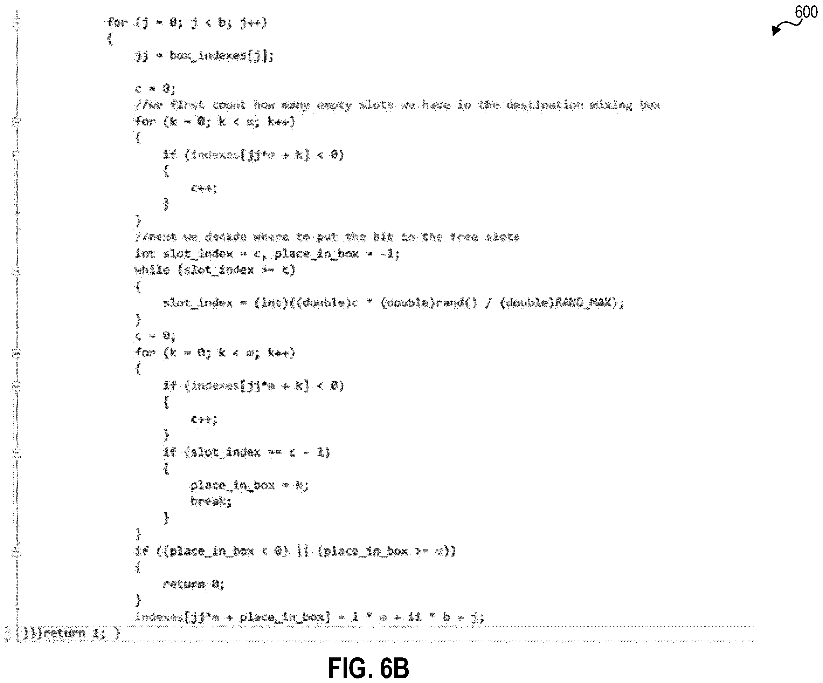

In certain embodiments, generation of the index sequences employed by the bit-length parameterizable cipher for the bit-level reordering may be accomplished by the algorithm of the code snippet of FIGURES 6A-6B. The algorithm of the code snippet 600 assumes that the width of each substitution box, also referred to as "missing box" in the comments of the code and denoted as "m", is a multiple of the number of the mixing boxes employed by the cipher, denoted as "b". With this assumption, the algorithm generates index sequences as follows. It first determines the number "dd" of times to iterate over the bits of a mixing box (S-box) in order to distribute these bits over all mixing boxes. The parameter "dd" should be equal to m/b. Then for each of the "dd" iterations, the algorithm generates a random sequence of numbers from 0 to b-1. These are the indexes of the mixing boxes where the input bits of the current iteration will be placed.

Subsequently, for each input bit, the algorithm picks a bit position at random from among the empty bit positions in the bit's target mixing box and assigns this position to the bit. This last step is repeated for all iterations of the triply nested loop of the code. One can show that the algorithm produces sequences of indexes that are both "correct" and "proper", with "correct" meaning that every bit of the input is placed in a different bit position of the output and there is no input which is omitted from the output, and "proper" meaning that if such re-ordering operations are combined with m-bit wide substitution operations, then after $\log_m n$ rounds all bits of the inputs have been fully mixed with each other even if additions with carries are absent.

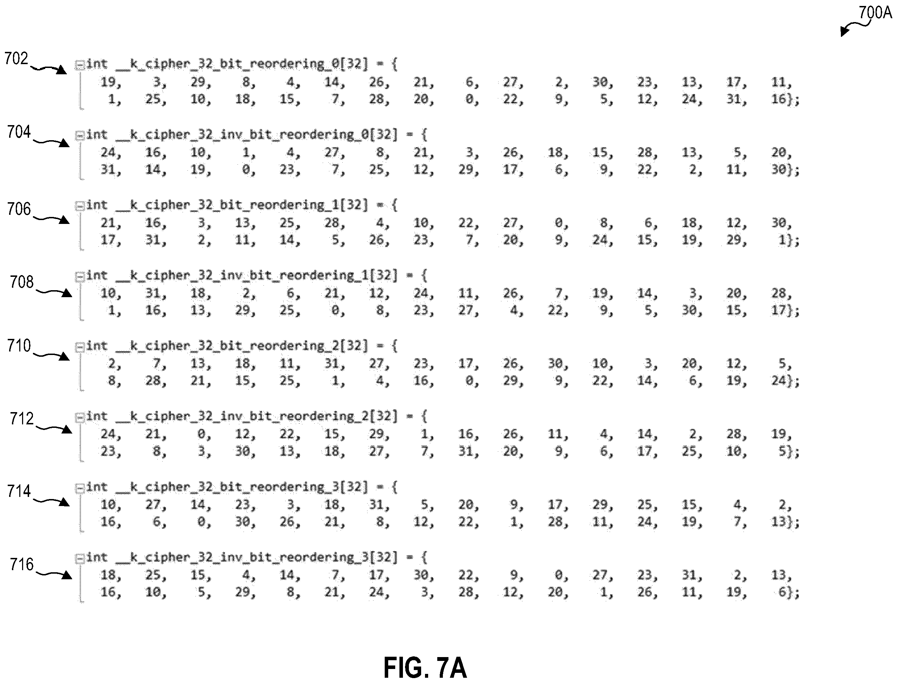

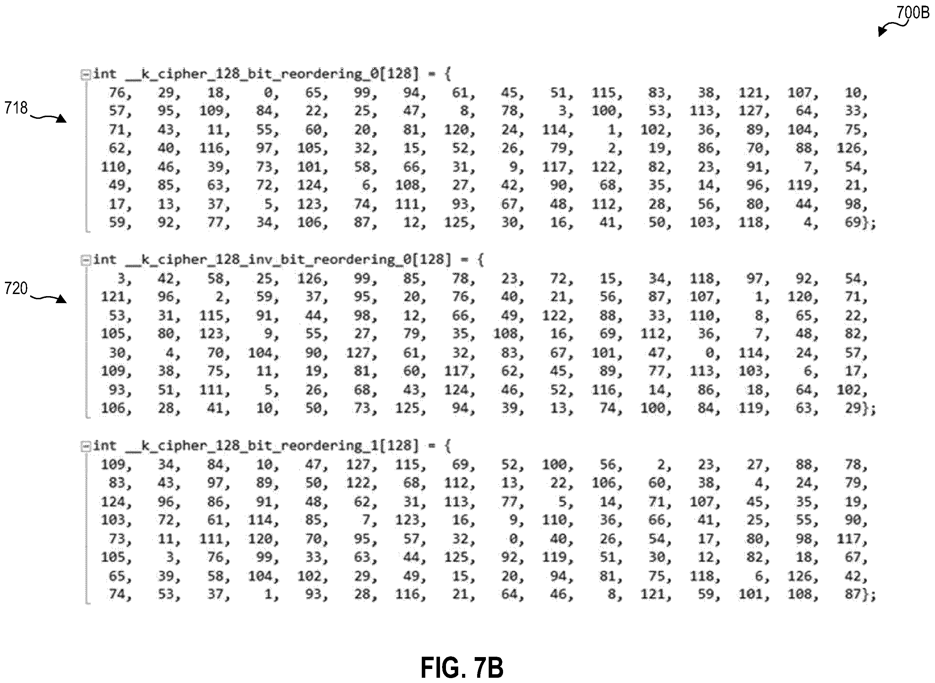

Examples of reordering index sequences generated using the code shown in FIGURES 6A-6B are shown in FIGURES 7A-7B. In particular, the sequences 700A of FIGURE 7A are example reordering index sequences (and corresponding inverse sequences) for 32 indexes, and the sequences 700B of FIGURE 7B are example reordering index sequences (and corresponding inverse sequences) for 128 indexes. Each reordering sequence in FIGURES 7A-7B has a corresponding inverse sequence for the decryption side of the cipher. For example, the sequence 702 has a corresponding inverse sequence 704, the sequence 706 has a corresponding inverse sequence 708, the sequence 710 has a corresponding inverse sequence 712, the sequence 714 has a corresponding inverse sequence 716, and the sequence 718 has a corresponding inverse sequence 720.

If the width of each substitution box is not a multiple of the number of the mixing boxes, the code of FIGURES 6A-6B can still be used for computing index sequences. In this case, input sequences may be considered padded with zeros and the re-orderings are first computed for such larger sets of input bits, the cardinality of which does not violate the assumption. Subsequently, the indexes corresponding to the padding are omitted from the reordering. The process may be repeated until the produced index sequence is proper.

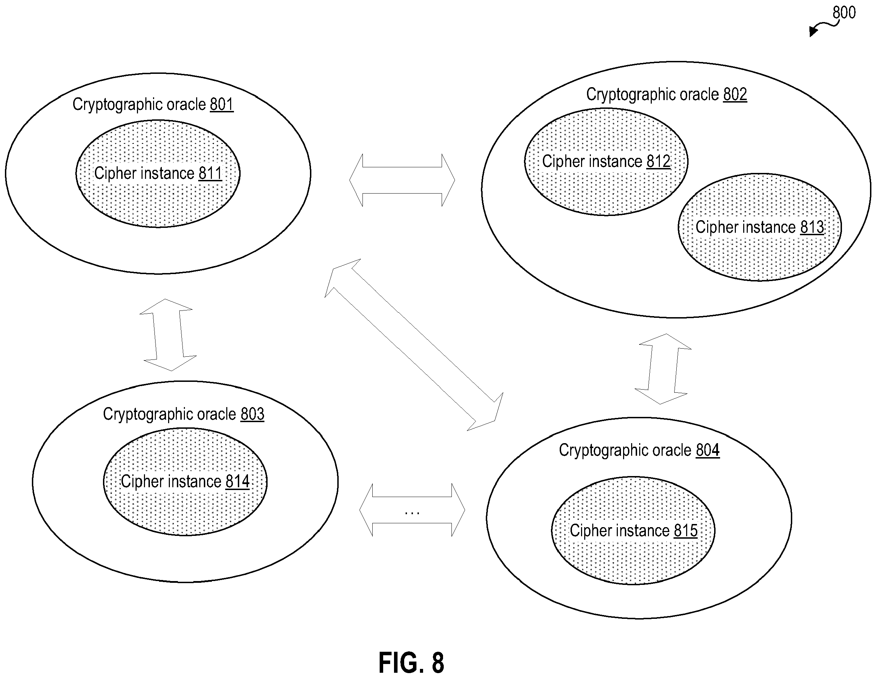

In some instances, the cipher described herein may be included as part of a larger cryptographic construction. FIGURE 8 is a simplified diagram of a cryptographic construction 800 comprising a plurality of interconnected cryptographic oracles 801, 802, 803, 804 that each employ one or more instances of a bit-length parameterizable cipher 811, 812, 813, 814, 815 (e.g., ciphers based on the process 100 of FIGURE 1 and/or process 200 of FIGURE 2). Examples of known cryptographic constructions that may employ the cipher as a component include (but are not limited to) Feistel structures, sponge structures, Davies Meyer constructions, the CBC, CTR, GCM, XEX and XTS block cipher modes of operations, etc.

The example processes described above may include additional or different operations, and the operations may be performed in the order shown or in another order. In some cases, one or more of the operations shown in the flow diagrams of FIGURES 1-3 and 5 are implemented as processes that include multiple operations, sub-processes, or other types of routines. In some cases, operations can be combined, performed in another order, performed in parallel, iterated, or otherwise repeated or performed another manner.

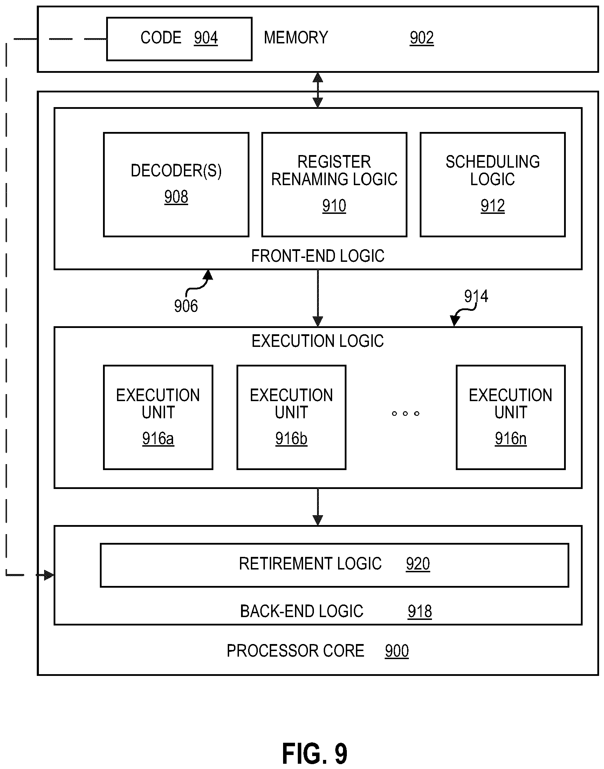

FIGURES 9-10 are block diagrams of exemplary computer architectures that may be used in accordance with embodiments disclosed herein. Generally, any computer architecture designs known in the art for processors and computing systems may be used. In an example, system designs and configurations known in the arts for laptops, desktops, handheld PCs, personal digital assistants, tablets, engineering workstations, servers, network devices, servers, appliances, network hubs, routers, switches, embedded processors, digital signal processors (DSPs), graphics devices, video game devices, set-top boxes, micro controllers, smart phones, mobile devices, wearable electronic devices, portable media players, hand held devices, and various other electronic devices, are also suitable for embodiments of computing systems described herein. Generally, suitable computer architectures for embodiments disclosed herein can include, but are not limited to, configurations illustrated in FIGURES 9-10.

FIGURE 9 is an example illustration of a processor according to an embodiment. Processor 900 is an example of a type of hardware device that can be used in connection with the implementations above. Processor 900 may be any type of processor, such as a microprocessor, an embedded processor, a digital signal processor (DSP), a network processor, a multi-core processor, a single core processor, or other device to execute code. Although only one processor 900 is illustrated in FIGURE 9, a processing element may alternatively include more than one of processor 900 illustrated in FIGURE 9. Processor 900 may be a single-threaded core or, for at least one embodiment, the processor 900 may be multi-threaded in that it may include more than one hardware thread context (or "logical processor") per core.

FIGURE 9 also illustrates a memory 902 coupled to processor 900 in accordance with an embodiment. Memory 902 may be any of a wide variety of memories (including various layers of memory hierarchy) as are known or otherwise available to those of skill in the art. Such memory elements can include, but are not limited to, random access memory (RAM), read only memory (ROM), logic blocks of a field programmable gate array (FPGA), erasable programmable read only memory (EPROM), and electrically erasable programmable ROM (EEPROM).

Processor 900 can execute any type of instructions associated with algorithms, processes, or operations detailed herein. Generally, processor 900 can transform an element or an article (e.g., data) from one state or thing to another state or thing.

Code 904, which may be one or more instructions to be executed by processor 900, may be stored in memory 902, or may be stored in software, hardware, firmware, or any suitable combination thereof, or in any other internal or external component, device, element, or object where appropriate and based on particular needs. In one example, processor 900 can follow a program sequence of instructions indicated by code 904. Each instruction enters a front-end logic 906 and is processed by one or more decoders 908. The decoder may generate, as its output, a micro operation such as a fixed width micro operation in a predefined format, or may generate other instructions, microinstructions, or control signals that reflect the original code instruction. Front-end logic 906 also includes register renaming logic 910 and scheduling logic 912, which generally allocate resources and queue the operation corresponding to the instruction for execution.

Processor 900 can also include execution logic 914 having a set of execution units 916a, 916b, 916n, etc. Some embodiments may include a number of execution units dedicated to specific functions or sets of functions. Other embodiments may include only one execution unit or one execution unit that can perform a particular function. Execution logic 914 performs the operations specified by code instructions.

After completion of execution of the operations specified by the code instructions, back-end logic 918 can retire the instructions of code 904. In one embodiment, processor 900 allows out of order execution but requires in order retirement of instructions. Retirement logic 920 may take a variety of known forms (e.g., re-order buffers or the like). In this manner, processor 900 is transformed during execution of code 904, at least in terms of the output generated by the decoder, hardware registers and tables utilized by register renaming logic 910, and any registers (not shown) modified by execution logic 914.

Although not shown in FIGURE 9, a processing element may include other elements on a chip with processor 900. For example, a processing element may include memory control logic along with processor 900. The processing element may include I/O control logic and/or may include I/O control logic integrated with memory control logic. The processing element may also include one or more caches. In some embodiments, non-volatile memory (such as flash memory or fuses) may also be included on the chip with processor 900.

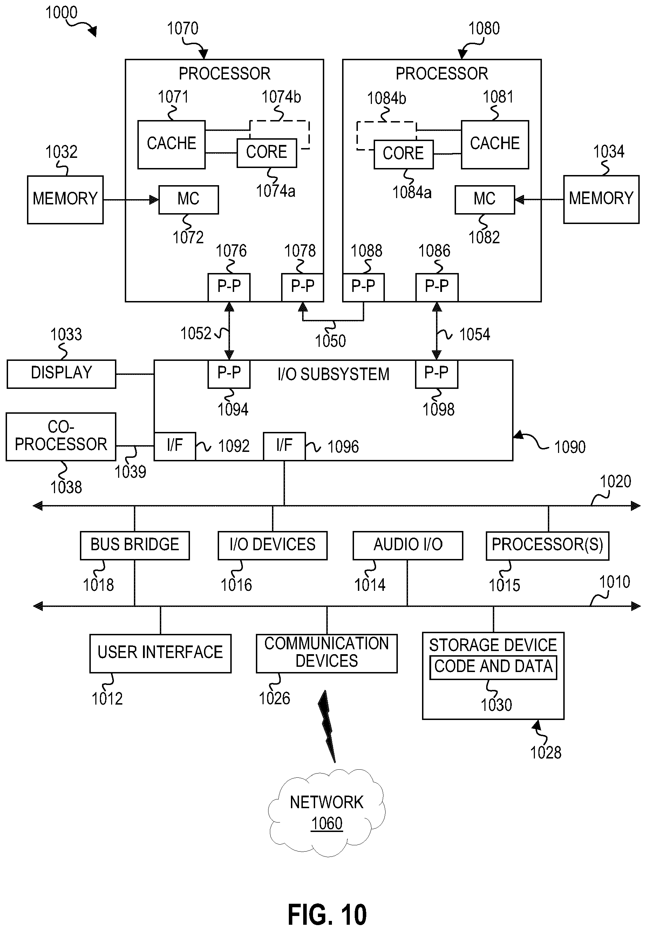

FIGURE 10 illustrates a computing system 1000 that is arranged in a point-to-point (PtP) configuration according to an embodiment. In particular, FIGURE 10 shows a system where processors, memory, and input/output devices are interconnected by a number of point-to-point interfaces. Generally, one or more of the computing systems or computing devices described herein may be configured in the same or similar manner as computing system 1000.

Processors 1070 and 1080 may be implemented as single core processors 1074a and 1084a or multi-core processors 1074a-1074b and 1084a-1084b. Processors 1070 and 1080 may each include a cache 1071 and 1081 used by their respective core or cores. A shared cache (not shown) may be included in either processors or outside of both processors, yet connected with the processors via P-P interconnect, such that either or both processors' local cache information may be stored in the shared cache if a processor is placed into a low power mode.

Processors 1070 and 1080 may also each include integrated memory controller logic (MC) 1072 and 1082 to communicate with memory elements 1032 and 1034, which may be portions of main memory locally attached to the respective processors. In alternative embodiments, memory controller logic 1072 and 1082 may be discrete logic separate from processors 1070 and 1080. Memory elements 1032 and/or 1034 may store various data to be used by processors 1070 and 1080 in achieving operations and functionality outlined herein.

Processors 1070 and 1080 may be any type of processor, such as those discussed in connection with other figures. Processors 1070 and 1080 may exchange data via a point-to-point (PtP) interface 1050 using point-to-point interface circuits 1078 and 1088, respectively. Processors 1070 and 1080 may each exchange data with an input/output (I/O) subsystem 1090 via individual point-to-point interfaces 1052 and 1054 using point-to-point interface circuits 1076, 1086, 1094, and 1098. I/O subsystem 1090 may also exchange data with a high-performance graphics circuit 1038 via a high-performance graphics interface 1039, using an interface circuit 1092, which could be a PtP interface circuit. In one embodiment, the high-performance graphics circuit 1038 is a special-purpose processor, such as, for example, a high-throughput MIC processor, a network or communication processor, compression engine, graphics processor, GPGPU, embedded processor, or the like. I/O subsystem 1090 may also communicate with a display 1033 for displaying data that is viewable by a human user. In alternative embodiments, any or all of the PtP links illustrated in FIGURE 10 could be implemented as a multi-drop bus rather than a PtP link.

I/O subsystem 1090 may be in communication with a bus 1020 via an interface circuit 1096. Bus 1020 may have one or more devices that communicate over it, such as a bus bridge 1018 and I/O devices 1016. Via a bus 1010, bus bridge 1018 may be in communication with other devices such as a user interface 1012 (such as a keyboard, mouse, touchscreen, or other input devices), communication devices 1026 (such as modems, network interface devices, or other types of communication devices that may communicate through a computer network 1060), audio I/O devices 1014, and/or a data storage device 1028. Data storage device 1028 may store code and data 1030, which may be executed by processors 1070 and/or 1080. In alternative embodiments, any portions of the bus architectures could be implemented with one or more PtP links.

The computer system depicted in FIGURE 10 is a schematic illustration of an embodiment of a computing system that may be utilized to implement various embodiments discussed herein. It will be appreciated that various components of the system depicted in FIGURE 10 may be combined in a system-on-a-chip (SoC) architecture or in any other suitable configuration capable of achieving the functionality and features of examples and implementations provided herein.

Although this disclosure has been described in terms of certain implementations and generally associated methods, alterations and permutations of these implementations and methods will be apparent to those skilled in the art. For example, the actions described herein can be performed in a different order than as described and still achieve the desirable results. As one example, the processes depicted in the accompanying figures do not necessarily require the particular order shown, or sequential order, to achieve the desired results. In certain implementations, multitasking and parallel processing may be advantageous. Other variations are within the scope of the following claims.

The architectures presented herein are provided by way of example only, and are intended to be non-exclusive and non-limiting. Furthermore, the various parts disclosed are intended to be logical divisions only, and need not necessarily represent physically separate hardware and/or software components. Certain computing systems may provide memory elements in a single physical memory device, and in other cases, memory elements may be functionally distributed across many physical devices. In the case of virtual machine managers or hypervisors, all or part of a function may be provided in the form of software or firmware running over a virtualization layer to provide the disclosed logical function.

Note that with the examples provided herein, interaction may be described in terms of a single computing system. However, this has been done for purposes of clarity and example only. In certain cases, it may be easier to describe one or more of the functionalities of a given set of flows by only referencing a single computing system. Moreover, the system for deep learning and malware detection is readily scalable and can be implemented across a large number of components (e.g., multiple computing systems), as well as more complicated/sophisticated arrangements and configurations. Accordingly, the examples provided should not limit the scope or inhibit the broad teachings of the computing system as potentially applied to a myriad of other architectures.

As used herein, unless expressly stated to the contrary, use of the phrase 'at least one of' refers to any combination of the named elements, conditions, or activities. For example, 'at least one of X, Y, and Z' is intended to mean any of the following: 1) at least one X, but not Y and not Z; 2) at least one Y, but not X and not Z; 3) at least one Z, but not X and not Y; 4) at least one X and Y, but not Z; 5) at least one X and Z, but not Y; 6) at least one Y and Z, but not X; or 7) at least one X, at least one Y, and at least one Z.

Additionally, unless expressly stated to the contrary, the terms 'first', 'second', 'third', etc., are intended to distinguish the particular nouns (e.g., element, condition, module, activity, operation, claim element, etc.) they modify, but are not intended to indicate any type of order, rank, importance, temporal sequence, or hierarchy of the modified noun. For example, 'first X' and 'second X' are intended to designate two separate X elements that are not necessarily limited by any order, rank, importance, temporal sequence, or hierarchy of the two elements.

References in the specification to "one embodiment," "an embodiment," "some embodiments," etc., indicate that the embodiment(s) described may include a particular feature, structure, or characteristic, but every embodiment may or may not necessarily include that particular feature, structure, or characteristic. Moreover, such phrases are not necessarily referring to the same embodiment.

While this specification contains many specific implementation details, these should not be construed as limitations on the scope of any embodiments or of what may be claimed, but rather as descriptions of features specific to particular embodiments. Certain features that are described in this specification in the context of separate embodiments can also be implemented in combination in a single embodiment. Conversely, various features that are described in the context of a single embodiment can also be implemented in multiple embodiments separately or in any suitable sub combination. Moreover, although features may be described above as acting in certain combinations and even initially claimed as such, one or more features from a claimed combination can in some cases be excised from the combination, and the claimed combination may be directed to a sub combination or variation of a sub combination.

Similarly, the separation of various system components and modules in the embodiments described above should not be understood as requiring such separation in all embodiments. It should be understood that the described program components, modules, and systems can generally be integrated together in a single software product or packaged into multiple software products.

Thus, particular embodiments of the subject matter have been described. Other embodiments are within the scope of this disclosure. Numerous other changes, substitutions, variations, alterations, and modifications may be ascertained to one skilled in the art and it is intended that the present disclosure encompass all such changes, substitutions, variations, alterations, and modifications as falling within the scope of the appended claims.

**Claims**

1. A method of encrypting a number of plaintext bits based on a bit-length parameter, comprising:

   obtaining (102) a bit-length parameter indicating a number of plaintext bits to encrypt;
   obtaining (104) a set of plaintext bits, wherein a length of the set of plaintext bits is equal to the bit-length parameter;
   obtaining (106) a set of key bits, wherein a length of the set of key bits is equal to the bit-length parameter; and
   performing (108) multiple arithmetic-reorder-substitution rounds using the set of plaintext bits and the set of key bits, wherein each arithmetic-reorder-substitution round comprises:
performing (202) an integer arithmetic operation on round key bits and round input bits, wherein:

the set of plaintext bits are used as round input bits for a first arithmetic-reorder-substitution round and each subsequent arithmetic-reorder-substitution round uses the output of the previous arithmetic reorder-substitution round as its round input bits; and
the set of key bits are used as round key bits for the first round and round key bits for each subsequent arithmetic-reorder-substitution are derived from the set of key bits;
performing a bit-level reordering operation on an output of the integer arithmetic operation; and
performing (208) a substitution box operation on an output of the bit-level reordering operation; and
performing (210) an XOR operation on an output of the multiple arithmetic-reorder-substitution rounds and a set of round key bits based on the set of key bits to yield a ciphertext.

2. The method of claim 1, wherein obtaining the set of plaintext bits comprises selecting the set of plaintext bits from a plaintext whose length is greater than the bit-length parameter.

3. The method of claim 1, wherein obtaining the set of key bits comprises selecting the set of key bits from an encryption key whose length is greater than the bit-length parameter.

4. The method of claim 1, wherein the first and second integer arithmetic operations each comprise one of an integer addition with carries operation and an integer subtraction with borrows operation.

5. The method of claim 1, wherein the first bit-level reordering operation is based on a different reordering sequence than the second bit-level reordering operation.

6. The method of claim 1, wherein the output of the bit-level reordering operation comprises N bits, and the substitution box operation is performed using at least floor (N/M) Galois field inverters, where M < N.

7. The method of claim 6, wherein N is not a multiple of M, and the number of inverters used in the substitution box operation comprises floor (N/M) Galois field inverters.

8. The method of claim 7, wherein N mod M = K, and the substitution box operation further comprises a Galois field inverter in $GF(2^K)$.

9. The method of claim 1, wherein the second set of key bits is derived from the first set of key bits at least in part by:

performing a third integer arithmetic operation on the first set of key bits and a constant;
performing a third bit-level reordering operation on an output of the integer arithmetic operation; and
performing a third substitution box operation on an output of the bit-level reordering operation.

10. The method of claim 8, wherein the third integer arithmetic operation comprises one of an integer addition with carries operation and an integer subtraction with borrows operation.

11. The method of claim 9, wherein the constant is a first constant, and the method further comprises deriving a third set of key bits at least in part by:

performing a fourth integer arithmetic operation on the second set of key bits and a second constant;
performing a fourth bit-level reordering operation on an output of the integer arithmetic operation; and
performing a fourth substitution box operation on an output of the bit-level reordering operation.

12. An apparatus comprising means to perform a method of any preceding claim.

13. A non-transitory computer-readable medium storing instructions that when executed cause a machine to implement a method of any one of claims 1-11 or realize an apparatus of claim 12.

**Patentansprüche**

1. Verfahren zum Verschlüsseln einer Anzahl von Klartextbits basierend auf einem Bitlängenparameter, umfassend:

   Erhalten (102) eines Bitlängenparameters, der eine Anzahl von zu verschlüsselnden Klartextbits angibt;
   Erhalten (104) eines Satzes von Klartextbits, wobei eine Länge des Satzes von Klartextbits gleich dem Bitlängenparameter ist;
   Erhalten (106) eines Satzes von Schlüsselbits, wobei eine Länge des Satzes von Schlüsselbits gleich dem Bitlängenparameter ist; und
   Durchführen (108) mehrerer arithmetischer Neuordnungs-Substitutionsrunden unter Verwendung des Satzes von Klartextbits und des Satzes von Schlüsselbits, wobei jede arithmetische Neuordnungs-Substitutionsrunde umfasst:
   Durchführen (202) einer ganzzahligen arithmetischen Operation an Rundenschlüsselbits und Rundeneingabebits, wobei:

   der Satz von Klartextbits als Rundeneingabebits für eine erste arithmetische Neuordnungs-Substitutionsrunde verwendet, und jede nachfolgende arithmetische Neuordnungs-Substitutionsrunde die Ausgabe der vorherigen arithmetischen Neuordnungs-Substitutionsrunde als ihre Rundeneingabebits verwendet; und
   der Satz von Schlüsselbits als Rundenschlüsselbits für die erste Runde verwendet wird, und die Rundenschlüsselbits für jede nachfolgende arithmetische Neuordnungs-Substitution aus dem Satz von Schlüsselbits abgeleitet werden;
   Durchführen einer Bitebene-Neuordnungsoperation an einer Ausgabe der ganzzahligen arithmetischen Operation; und
   Durchführen (208) einer Substitutionsbox-Operation an einer Ausgabe der Bitebene-Neuordnungsoperation; und
   Durchführen (210) einer XOR-Operation an einer Ausgabe der mehreren arithmetischen Neuordnungs-Substitutionsrunden und eines Satzes von Rundenschlüsselbits basierend auf dem Satz von Schlüsselbits, um einen Chiffretext zu erhalten.

2. Verfahren nach Anspruch 1, wobei das Erhalten des Satzes von Klartextbits das Auswählen des Satzes von Klartextbits aus einem Klartext umfasst, dessen Länge größer als der Bitlängenparameter ist.

3. Verfahren nach Anspruch 1, wobei das Erhalten des Satzes von Schlüsselbits das Auswählen des Satzes von Schlüsselbits aus einem Verschlüsselungsschlüssel umfasst, dessen Länge größer als der Bitlängenparameter ist.

4. Verfahren nach Anspruch 1, wobei die erste und zweite ganzzahlige arithmetische Operation jeweils eine ganzzahlige Addition mit Übertragsoperation oder eine ganzzahlige Subtraktion mit Umgruppierungsoperation umfassen.

5. Verfahren nach Anspruch 1, wobei die erste Bitebene-Neuordnungsoperation auf einer anderen Neuordnungssequenz basiert als die zweite Bitebene-Neuordnungsoperation.

6. Verfahren nach Anspruch 1, wobei die Ausgabe der Bitebene-Neuordnungsoperation N Bits umfasst und die Substitutionsbox-Operation unter Verwendung von mindestens abgerundet (N/M) Galoiskörper-Invertierern durchgeführt wird, wobei M < N.

7. Verfahren nach Anspruch 6, wobei N kein Vielfaches von M ist und die Anzahl der in der S-Box Operationen verwendeten Invertierer abgerundet (N/M) Galoiskörper-Invertierer umfasst.

8. Verfahren nach Anspruch 7, wobei N mod M = K ist und die Substitutionsbox-Operation ferner einen Galoiskörper-Invertierer in $GF(2^K)$ umfasst.

9. Verfahren nach Anspruch 1, wobei der zweite Satz von Schlüsselbits zumindest teilweise aus dem ersten Satz von Schlüsselbits durch Folgendes abgeleitet wird:

   Durchführen einer dritten ganzzahligen arithmetischen Operation an dem ersten Satz von Schlüsselbits und einer Konstante;
   Durchführen einer dritten Bitebene-Neuordnungsoperation an einer Ausgabe der ganzzahligen arithmetischen Operation; und

Durchführen einer dritten Substitutionsbox-Operation an einer Ausgabe der Bitebene-Neuordnungsoperation.

10. Verfahren nach Anspruch 8, wobei die dritte ganzzahlige arithmetische Operation entweder eine ganzzahlige Addition mit Übertragsoperation oder eine ganzzahlige Subtraktion mit Umgruppierungsoperation umfasst.

11. Verfahren nach Anspruch 9, wobei die Konstante eine erste Konstante ist und das Verfahren ferner das Ableiten eines dritten Satzes von Schlüsselbits zumindest teilweise durch Folgendes umfasst:

Durchführen einer vierten ganzzahligen arithmetischen Operation an dem zweiten Satz von Schlüsselbits und einer zweiten Konstante;
Durchführen einer vierten Bitebene-Neuordnungsoperation an einer Ausgabe der ganzzahligen arithmetischen Operation; und
Durchführen einer vierten Substitutionsbox-Operation an einer Ausgabe der Bitebene-Neuordnungsoperation.

12. Vorrichtung, die Mittel umfasst, um ein Verfahren nach einem der vorhergehenden Ansprüche durchzuführen.

13. Nichtflüchtiges computerlesbares Medium, auf dem Anweisungen gespeichert sind, die bei Ausführung eine Maschine veranlassen, ein Verfahren nach einem der Ansprüche 1 bis 11 zu implementieren oder eine Vorrichtung nach Anspruch 12 zu realisieren.

**Revendications**

1. Procédé pour chiffrer un nombre de bits de texte en clair sur la base d'un paramètre de longueur en bits, comprenant les étapes consistant à :

obtenir (102) un paramètre de longueur en bits indiquant un nombre de bits de texte en clair à chiffrer ;
obtenir (104) un ensemble de bits de texte en clair, une longueur de l'ensemble de bits de texte en clair étant égale au paramètre de longueur en bits ;
obtenir (106) un ensemble de bits de clé, une longueur de l'ensemble de bits de clé étant égale au paramètre de longueur en bits ; et
effectuer (108) de multiples tours arithmétique-réarrangement-substitution à l'aide de l'ensemble de bits de texte en clair et de l'ensemble de bits de clé, chaque tour arithmétique-réarrangement-substitution consistant à :
effectuer (202) une opération arithmétique entière sur des bits de clé de tour et des bits d'entrée de tour, dans laquelle :

l'ensemble de bits de texte en clair est utilisé comme bits d'entrée de tour pour un premier tour arithmétique-réarrangement-substitution, et chaque tour arithmétique-réarrangement-substitution suivant utilise la sortie du tour arithmétique-réarrangement-substitution précédent comme bits d'entrée de tour ; et
l'ensemble de bits de clé est utilisé comme bits de clé de tour pour le premier tour, et les bits de clé de tour pour chaque opération arithmétique-réarrangement-substitution suivante sont dérivés de l'ensemble de bits de clé ;
effectuer une opération de réarrangement sur bits sur une sortie de l'opération arithmétique entière ; et
effectuer (208) une opération de boîte de substitution sur une sortie de l'opération de réarrangement sur bits ; et
effectuer (210) une opération XOR sur une sortie des multiples tours arithmétique-réarrangement-substitution et un ensemble de bits de clé de tour basé sur l'ensemble de bits de clé pour produire un texte chiffré.

2. Procédé selon la revendication 1, dans lequel l'obtention de l'ensemble de bits de texte en clair comprend la sélection de l'ensemble de bits de texte en clair dans un texte en clair dont la longueur est supérieure au paramètre de longueur en bits.

3. Procédé selon la revendication 1, dans lequel l'obtention de l'ensemble de bits de clé comprend la sélection de l'ensemble de bits de clé dans une clé de chiffrement dont la longueur est supérieure au paramètre de longueur en bits.

4. Procédé selon la revendication 1, dans lequel les première et deuxième opérations arithmétiques entières comprennent chacune une addition d'entiers avec opération de report et une soustraction d'entiers avec opération de retenue.

5. Procédé selon la revendication 1, dans lequel la première opération de réarrangement sur bits repose sur une séquence de réarrangement différente de celle de la deuxième opération de réarrangement sur bits.

6. Procédé selon la revendication 1, dans lequel la sortie de l'opération de réarrangement sur bits comprend N bits, et l'opération de boîte de substitution est effectuée à l'aide d'au moins floor(N/M) inverseurs de champ de Galois, où M < N.

7. Procédé selon la revendication 6, dans lequel N n'est pas un multiple de M, et le nombre d'inverseurs utilisés dans l'opération de boîte de substitution comprend floor(N/M) inverseurs de champ de Galois.

8. Procédé selon la revendication 7, dans lequel N mod M = K, et l'opération de boîte de substitution comprend également un inverseur de champ de Galois en GF($2^K$).

9. Procédé selon la revendication 1, dans lequel le deuxième ensemble de bits de clé est dérivé du premier ensemble de bits de clé, au moins en partie, par :

   l'exécution d'une troisième opération arithmétique entière sur le premier ensemble de bits de clé et une constante ;
   l'exécution d'une troisième opération de réarrangement sur bits sur une sortie de l'opération arithmétique entière ; et
   l'exécution d'une troisième opération de boîte de substitution sur une sortie de l'opération de réarrangement sur bits.

10. Procédé selon la revendication 8, dans lequel la troisième opération arithmétique entière comprend une opération parmi une addition d'entiers avec opération de report et une soustraction d'entiers avec opération de retenue.

11. Procédé selon la revendication 9, dans lequel la constante est une première constante, et le procédé comprenant également la dérivation d'un troisième ensemble de bits de clé, au moins en partie, par :

   l'exécution d'une quatrième opération arithmétique entière sur le deuxième ensemble de bits de clé et une deuxième constante ;
   l'exécution d'une quatrième opération de réarrangement sur bits sur une sortie de l'opération arithmétique entière ; et
   l'exécution d'une quatrième opération de boîte de substitution sur une sortie de l'opération de réarrangement sur bits.

12. Appareil comprenant des moyens pour exécuter un procédé selon l'une quelconque des revendications précédentes.

13. Support non transitoire lisible par ordinateur stockant des instructions qui, lorsqu'elles sont exécutées, amènent une machine à mettre en œuvre un procédé selon l'une quelconque des revendications 1 à 11 ou permettent de réaliser un appareil selon la revendication 12.

_~100_

| |
|---|
| 102 — Obtain bit-length parameter indicating number of plaintext bits to encrypt |

| |
|---|
| 104 — Obtain plaintext bits from plaintext |

| |
|---|
| 106 — Obtain key bits from encryption key |

| |
|---|
| 108 — Perform sequence of logical operations including at least two AND operations and at least two XOR operations, where each operation is performed on at least one plaintext bit and at least one key bit |

| |
|---|
| 110 — Output ciphertext |

# FIG. 1

_200_

Plaintext bits and key bits

202 — Integer arithmetic (e.g., addition w/carries or subtraction w/borrows) & reorder operation based on first round key and first reordering sequence

204 — Substitution box (S-box) operation (e.g., based on inversions in $GF(2^8)$, $GF(2^{16})$, $GF(2^{32})$)

206 — Integer arithmetic (e.g., addition w/carries or subtraction w/borrows) & reorder operation based on second round key and second reordering sequence

208 — Substitution box (S-box) operation (e.g., based on inversions in $GF(2^8)$, $GF(2^{16})$, $GF(2^{32})$)

210 — XOR with third round key

Ciphertext

**FIG. 2**

300

302     **Input bits**

**+ / -**    (Integer arithmetic)

304     **Round key**

=

306     **Modified state bits**

(Bit-level reordering)

308     **Output bits**

# FIG. 3A

```
┌─────────────────────┐        ┌─────────────────────┐        ┌─────────────────────┐
│ Round 1 key word 310A│        │ Round 2 key word 310B│        │ Round 3 key word 310C│
└─────────────────────┘        └─────────────────────┘        └─────────────────────┘
          │                               │                               │
          ▼                               │                               ▼
┌─────────────────────┐                   │               ┌─────────────────────┐
│ Perform arithmetic-  │                  │               │ Perform arithmetic-  │
│ reorder operation    │                  │               │ reorder operation    │
│ using round key      │                  │               │ using round key      │
│ word and tweak       │                  │               │ word and tweak       │
└─────────────────────┘                   │               └─────────────────────┘
          │                               │                               │
          ▼                               ▼                               ▼
┌─────────────────────┐        ┌─────────────────────┐        ┌─────────────────────┐
│  Round 1 key 320A   │        │  Round 2 key 320B   │        │  Round 3 key 320C   │
└─────────────────────┘        └─────────────────────┘        └─────────────────────┘
```

FIG. 3B

400A

N bits long, where (N mod M) = K > 0

| M bits | | M bits | | . . . | | M bits | | K bits $(K < M)$ |

S-box using $GF(2^M)$ inverters      S-box using $GF(2^K)$ inverter

## FIG. 4A

400B

N bits long, where (N mod M) = K > 0

| M bits | | M bits | | . . . | | M bits | | K bits $(K < M)$ |

S-box using $GF(2^M)$ inverters      No substitutions for remaining K bits

## FIG. 4B

FIG. 5

```
int
compute_reordering_indexes_full_mixing(int indexes[], int n, int m)
{
    int i = 0, ii = 0, j = 0, jj = 0, k = 0, b = 0, dd = 0, box_indexes[32], c = 0;
    if (n % m != 0)
    {
        return 0;
    }
    b = n / m;   //number of mixing boxes;
    if (m < b)  //the width of the mixing should be greater or equal to the number of boxes
    {
        return 0;
    }
    if (m % b != 0)
    {
        return 0;
    }
    dd = m / b;

    //dd is the number of times we have to iterate over the bits of a mixing box to distribute
    //its bits over all mixing boxes;

    for (i = 0; i < n; i++)
    {
        indexes[i] = -1;
    }

    for (i = 0; i < b; i++)  //i is the index of mixing box
    {
        for (ii = 0; ii < dd; ii++)  //ii is the index of the slice of the mixing box where the slice width is b
        {
            compute_reordering_indexes(box_indexes, b);
            //this reordering scheme indicates how the bits of the silce will be distributed
```

FIG. 6A

```
for (j = 0; j < b; j++)
{
    jj = box_indexes[j];

    c = 0;
    //we first count how many empty slots we have in the destination mixing box
    for (k = 0; k < m; k++)
    {
        if (indexes[jj*m + k] < 0)
        {
            c++;
        }
    }
    //next we decide where to put the bit in the free slots
    int slot_index = c, place_in_box = -1;
    while (slot_index >= c)
    {
        slot_index = (int)((double)c * (double)rand() / (double)RAND_MAX);
    }
    c = 0;
    for (k = 0; k < m; k++)
    {
        if (indexes[jj*m + k] < 0)
        {
            c++;
        }
        if (slot_index == c - 1)
        {
            place_in_box = k;
            break;
        }
    }
    if ((place_in_box < 0) || (place_in_box >= m))
    {
        return 0;
    }
    indexes[jj*m + place_in_box] = i * m + ii * b + j;
}}}return 1; }
```

FIG. 6B

700A

702 → ```
int __k_cipher_32_bit_reordering_0[32] = {
    19,    3,   29,    8,    4,   14,   26,   21,    6,   27,    2,   30,   23,   13,   17,   11,
     1,   25,   10,   18,   15,    7,   28,   20,    0,   22,    9,    5,   12,   24,   31,   16};
```

704 → ```
int __k_cipher_32_inv_bit_reordering_0[32] = {
    24,   16,   10,    1,    4,   27,    8,   21,    3,   26,   18,   15,   28,   13,    5,   20,
    31,   14,   19,    0,   23,    7,   25,   12,   29,   17,    6,    9,   22,    2,   11,   30};
```

706 → ```
int __k_cipher_32_bit_reordering_1[32] = {
    21,   16,    3,   13,   25,   28,    4,   10,   22,   27,    0,    8,    6,   18,   12,   30,
    17,   31,    2,   11,   14,    5,   26,   23,    7,   20,    9,   24,   15,   19,   29,    1};
```

708 → ```
int __k_cipher_32_inv_bit_reordering_1[32] = {
    10,   31,   18,    2,    6,   21,   12,   24,   11,   26,    7,   19,   14,    3,   20,   28,
     1,   16,   13,   29,   25,    0,    8,   23,   27,    4,   22,    9,    5,   30,   15,   17};
```

710 → ```
int __k_cipher_32_bit_reordering_2[32] = {
     2,    7,   13,   18,   11,   31,   27,   23,   17,   26,   30,   10,    3,   20,   12,    5,
     8,   28,   21,   15,   25,    1,    4,   16,    0,   29,    9,   22,   14,    6,   19,   24};
```

712 → ```
int __k_cipher_32_inv_bit_reordering_2[32] = {
    24,   21,    0,   12,   22,   15,   29,    1,   16,   26,   11,    4,   14,    2,   28,   19,
    23,    8,    3,   30,   13,   18,   27,    7,   31,   20,    9,    6,   17,   25,   10,    5};
```

714 → ```
int __k_cipher_32_bit_reordering_3[32] = {
    10,   27,   14,   23,    3,   18,   31,    5,   20,    9,   17,   29,   25,   15,    4,    2,
    16,    6,    0,   30,   26,   21,    8,   12,   22,    1,   28,   11,   24,   19,    7,   13};
```

716 → ```
int __k_cipher_32_inv_bit_reordering_3[32] = {
    18,   25,   15,    4,   14,    7,   17,   30,   22,    9,    0,   27,   23,   31,    2,   13,
    16,   10,    5,   29,    8,   21,   24,    3,   28,   12,   20,    1,   26,   11,   19,    6};
```

FIG. 7A

EP 3 839 788 B1

```
int __k_cipher_128_bit_reordering_0[128] = {
  76,   29,   18,    0,   65,   99,   94,   61,   45,   51,  115,   83,   38,  121,  107,   10,
  57,   95,  109,   84,   22,   25,   47,    8,   78,    3,  100,   53,  113,  127,   64,   33,
  71,   43,   11,   55,   60,   20,   81,  120,   24,  114,    1,  102,   36,   89,  104,   75,
  62,   40,  116,   97,  105,   32,   15,   52,   26,   79,    2,   19,   86,   70,   88,  126,
 110,   46,   39,   73,  101,   58,   66,   31,    9,  117,  122,   82,   23,   91,    7,   54,
  49,   85,   63,   72,  124,    6,  108,   27,   42,   90,   68,   35,   14,   96,  119,   21,
  17,   13,   37,    5,  123,   74,  111,   93,   67,   48,  112,   28,   56,   80,   44,   98,
  59,   92,   77,   34,  106,   87,   12,  125,   30,   16,   41,   50,  103,  118,    4,   69};

int __k_cipher_128_inv_bit_reordering_0[128] = {
   3,   42,   58,   25,  126,   99,   85,   78,   23,   72,   15,   34,  118,   97,   92,   54,
 121,   96,    2,   59,   37,   95,   20,   76,   40,   21,   56,   87,  107,    1,  120,   71,
  53,   31,  115,   91,   44,   98,   12,   66,   49,  122,   88,   33,  110,    8,   65,   22,
 105,   80,  123,    9,   55,   27,   79,   35,  108,   16,   69,  112,   36,    7,   48,   82,
  30,    4,   70,  104,   90,  127,   61,   32,   83,   67,  101,   47,    0,  114,   24,   57,
 109,   38,   75,   11,   19,   81,   60,  117,   62,   45,   89,   77,  113,  103,    6,   17,
  93,   51,  111,    5,   26,   68,   43,  124,   46,   52,  116,   14,   86,   18,   64,  102,
 106,   28,   41,   10,   50,   73,  125,   94,   39,   13,   74,  100,   84,  119,   63,   29};

int __k_cipher_128_bit_reordering_1[128] = {
 109,   34,   84,   10,   47,  127,  115,   69,   52,  100,   56,    2,   23,   27,   88,   78,
  83,   43,   97,   89,   50,  122,   68,  112,   13,   22,  106,   60,   38,    4,   24,   79,
 124,   96,   86,   91,   48,   62,   31,  113,   77,    5,   14,   71,  107,   45,   35,   19,
 103,   72,   61,  114,   85,    7,  123,   16,    9,  110,   36,   66,   41,   25,   55,   90,
  73,   11,  111,  120,   70,   95,   57,   32,    0,   40,   26,   54,   17,   80,   98,  117,
 105,    3,   76,   99,   33,   63,   44,  125,   92,  119,   51,   30,   12,   82,   18,   67,
  65,   39,   58,  104,  102,   29,   49,   15,   20,   94,   81,   75,  118,    6,  126,   42,
  74,   53,   37,    1,   93,   28,  116,   21,   64,   46,    8,  121,   59,  101,  108,   87};
```

718

720

**FIG. 7B**

EP 3 839 788 B1

FIG. 8

**FIG. 9**

**FIG. 10**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2015244518 A1
- US 2016056954 A1

- US 2011296202 A1